(19) Europäisches Patentamt
European Patent Office
Office européen des brevets

(11) EP 0 543 954 B1

(12) **EUROPEAN PATENT SPECIFICATION**

(45) Date of publication and mention
of the grant of the patent:
**30.10.1996 Bulletin 1996/44**

(51) Int Cl.$^6$: **G01C 15/00**, G01S 5/16,
G05D 1/03

(21) Application number: **91919739.2**

(22) Date of filing: **19.08.1991**

(86) International application number:
**PCT/US91/05797**

(87) International publication number:
**WO 92/03701 (05.03.1992 Gazette 1992/06)**

(54) **SPATIAL POSITIONING SYSTEM**

RÄUMLICHE POSITIONIERUNGSVORRICHTUNG

SYSTEME DE POSITIONNEMENT DANS L'ESPACE

(84) Designated Contracting States:
**AT BE CH DE DK ES FR GB GR IT LI LU NL SE**

(30) Priority: **17.08.1990 US 570268**
**31.12.1990 US 636459**

(43) Date of publication of application:
**02.06.1993 Bulletin 1993/22**

(60) Divisional application: **96103325.5**

(73) Proprietor: **SPATIAL POSITIONING SYSTEMS,
INC.**
**Blacksburg, VA 24060 (US)**

(72) Inventors:
• **BELIVEAU, Yvan, Joseph**
**Blacksburg, VA 24060 (US)**

• **LUNDBERG, Eric, J.**
**Reston, VA 20194 (US)**
• **PRATT, Timothy**
**Blacksburg, VA 24060 (US)**
• **DORNBUSCH, Andrew, W.**
**Blacksburg, VA 24060 (US)**

(74) Representative: **Walsh, Michael Joseph et al**
**TOMKINS & CO.**
**5, Dartmouth Road**
**Dublin 6 (IE)**

(56) References cited:
| | |
|---|---|
| FR-A- 2 584 197 | FR-A- 2 640 760 |
| GB-A- 2 152 320 | GB-A- 2 173 369 |
| US-A- 3 846 026 | US-A- 4 218 834 |
| US-A- 4 677 555 | US-A- 4 700 301 |
| US-A- 4 820 041 | US-A- 4 912 643 |
| US-A- 4 943 158 | US-A- 4 981 353 |

## Description

Field of the Invention

The present invention relates to a spatial positioning and measurement system and, more particularly, to a spatial positioning and measurement system for determining the instantaneous x-y-z position of an object in a three-dimensional Cartesian coordinate system, comprising at least one fixed reference station, the or each said reference station emitting at least one primary radiation beam which is rotated about an axis, and the or each said reference station also emitting at least one secondary radiation beam which is rotated in an opposite direction from said primary beam; a portable position sensor located at said object, said sensor including detector means for detecting said primary and secondary beams and emitting a signal each time one of said beams is detected; and determination means for determining the position of the object based on the signals emitted from said detector means. Such a system may provide the three-dimensional position of an object using three or more fixed referent stations systems and one or more portable position sensors, and can provide feedback for adjusting the position of the object.

Background of the Invention

Triangulation is a well known method of determining position. The basic premise of triangulation is as follows: given that a triangle has three sides and three interior angles for a total of six items of measurement, when three of these items of measurement are known, the remaining three unknown items of measurement can be resolved.

Resection is also a well known method of determining position. Resection is a special application of the triangulation method of positioning. The basic premise of resection is as follows: given three points of known position and a point of unknown position; the coordinates of the unknown point can be calculated when the angles between lines linking the three points of known position to the point of unknown position are also known.

A thesis entitled "The Design and Development of a Mobile Robot Location System" by Theodore Scott Rappaport, published in December, 1984, discloses two methods for determining position. The first of Rappaport's methods (Method I) is based on the special application of triangulation called resection. The positioning system utilizes three light beacons located at known positions and a rotating detector head which rotates at a constant angular velocity. The rotating detector head is attached to a mobile robot located in a unknown position. The angles between the lines of the three light beacons and the rotating detector head are determined through time measurements. A computer generates a time measurement each time a photodetector located on the horizontally rotating head detects a light beacon as the photodetector scans a horizontal plane. Time measurements are obtained as each beacon activates the photodetector.

Identifying the individual beacons, which is necessary in order to determine position, is accomplished by modulating one of the beacons differently than the other two beacons. A prototype mobile robot and positioning system was built of the above Method I system. Accuracies of ± 100mm were obtained except in "zones of ambiguity", which were defined as the area where adjacent beacon angles were less than 30 degrees.

The second positioning method disclosed by Rappaport (Method II) is one in which rotating light beacons are fixed in known positions and a portable light-detector is attached to the mobile robot.

Both Method I and Method II as disclosed by Rappaport can work only as an x, y positioning system. Method I utilizes timing of a rotating mechanism on a mobile robot. This rotating mechanism requires a very stable platform which will accommodate the movement of the mobile robot and ensure a horizontal plane, thus limiting the practicality of the system for variable z-axis measurements. Method II suffers from limited z-axis control and did not expressly provide for the synchronization of the time between the fixed stations and the portable station.

U.S. Patent No. 4,700,301 to Dyke discloses a method of automatically steering agricultural type vehicles on a predetermined course. In order to accomplish this, Dyke discloses a method of sensing the present position and direction of motion of the vehicle. The present position and direction are then compared to the predetermined course and the steering angle is adjusted to compensate for any differences.

More specifically, Dyke discloses installing a laser emitting a narrow beam of light and an optically aligned directional light detector on a rotating platform on the vehicle. Retroreflectors are placed at reference points around the field in which the vehicle is operating. When the laser light hits the retroreflectors, the reflected light is detected and the computer records counts corresponding to the times of the hits. The position of the vehicle can be determined from these counts.

Alternatively, Dyke discloses that the position of the vehicle can be determined using lasers rotating at a constant angular velocity located at two reference points, and an all directional light with a radio transmitter for transmitting a detect signal to the vehicle located at a third reference point. When the reflected light is detected, the computer records counts corresponding to the times of the hits. The position of the vehicle can be determined from these counts. The method disclosed by Dyke provides only a method for determining position of a vehicle in an x-y plane. There is no provision for determining position in an axis perpendicular to the x-y plane, i.e., the z-axis. Moreover, the method suffers from the disadvantage that it is limited to sites which are relatively planar.

U.S. Patent No. 4,820,041 to Davidson et al. discloses a position sensing system for surveying and grading. The system includes two laser reference stations, each of which emits a laser beam that periodically sweeps across the area to be surveyed. Each time a laser beam strikes the opposite reference station, a radio timing signal is broadcast by that reference station. Thus, each reference station must be connected by a line-of-sight to each other reference station so that all reference stations are on essentially the same elevation. The system also includes a portable sensing station having a laser beam receiver, a radio receiver and a programmed computer. The position of the sensing station in the x-y plane relative to the reference station is computed based on the relative timing of detection of the laser beams and the reception of the radio signals. The position of the sensing station in the z-direction, i.e., elevation, is determined according to the height at which one of the laser beams strikes the laser beam receiver.

The system disclosed by Davidson et al. suffers from several disadvantages. As Davidson et al. themselves acknowledge at column 24 of the patent, three such laser reference stations are required, as a practical matter, in order to improve the area of coverage and accuracy of the system. By using three such laser reference stations in an appropriate layout, the region of measurement ambiguity, which occurs in the area between two reference stations where the interior angles are very small and thus the intersection of the laser beams at the sensing station approaches a straight line, is eliminated. The incorporation of a third reference station is not described, and Davidson et al. does not disclose how this could be done in view of the need to have a line of sight between the reference stations in order to activate the timing datum. Furthermore, Davidson et al. does not disclose how the portable sensing station would identify the incoming laser beams from the individual reference stations, which is necessary in order to calculate position. This identification is a particular problem since a practical system will need a minimum of three laser reference stations, and this third laser beam will add significant identification complexity.

The four-sided linear array detector of the portable sensing station disclosed by Davidson et al. limits the range of vertical positioning to the length of the linear array, without some mechanical method of raising and lowering the four-sided linear array detector along the z-axis. In addition, the electronic circuitry required to manage the information from the four-sided linear array detector is complex. The vertical accuracy achievable in the Davidson et al. system with the four-sided linear array detector is a function of the height of the individual linear array detector elements, which is limited to a minimum height in order to provide sufficient photosensitive surface area to detect the laser beam. The horizontal (x, y) accuracy of the system disclosed by Davidson et al. is limited by the distance of the individual detectors of the four-sided linear array detector to the actual center of the portable sensing station, the position of which is being determined.

Moreover, the system disclosed by Davidson et al. requires alignment of each laser beam into a specific plane containing the laser and the reference photodetector corresponding to that laser. Thus, the measurement accuracy of the system disclosed by Davidson et al. depends, in a large part, on the distance of the portable sensing station from the fixed reference stations. There is no disclosure of how the system could be adapted for use on a large non-planar site (i.e. typical construction site) where more than two laser reference stations would be needed to achieve a useful accuracy over the entire site.

Furthermore, the range in which all coordinates (x, y, z) of the portable sensing station disclosed by Davidson et al. can be determined is limited to the planes where both rotating laser beams will strike the four-sided linear array detector.

GB-A-2 173 369 describes a position determining apparatus for use in land surveying in particular. A single laser beam with a straight line cross-section is caused to rotate with its straight line section at a known non-zero angle to the horizontal. As it rotates, it crosses at least three light detectors spaced in the vertical direction. The extent of the rotation of the beam is indicated by pulses transmitted to the detector station. The time of transit of the beam across the various detectors is also counted by these pulses. By suitable calculation, the distance, elevation and azimuth of the sensors from the source of the beam can be calculated. The system is directed to facilitating the determination of height, distance and angular position of a location with respect to a known reference point using a single instrument rather than several separate instruments. There is no disclosure relating to possible use of the system in any dynamic environment and neither is there any disclosure of possible use of multiple beams.

GB-A-2 152 320 describes a position locating system for enabling an object quipped with a receiver and microprocessor to locate its position. Two base stations, situated a known distance apart, transmit laser beams rotating about vertical axes. One station transmits two contra-rotating laser beams, while the other station transmits at least one laser beam. All the beams rotate at the same angular velocity and are capable of individual identification by each being transmitted on a unique (but parallel) plane of rotation. The receiver and microprocessor on the object calculate the angular bearing and thus the position of the object from the differences between the times at which the signals from the different rotating laser beams are detected at the receiver. The system described is adapted only to operation on level surfaces, x- and y-axis coordinates only, and there is no disclosure relating to the determination of z-axis information.

The present invention is directed to the provision of a spatial positioning and measurement system comprising a reference station which facilitates the ready establishment of z-axis information and is therefore suitable for establishing three-dimensional position in particular in a dynamic context and also in the presence of uneven ground or surface conditions.

Summary of the Invention

Such a system is defined in independent claim 1, and operates according to the method defined in independent claim 6. Dependent claims 2-5 define specific embodiments of the invention as defined by claim 1.

Brief Description of the Drawings

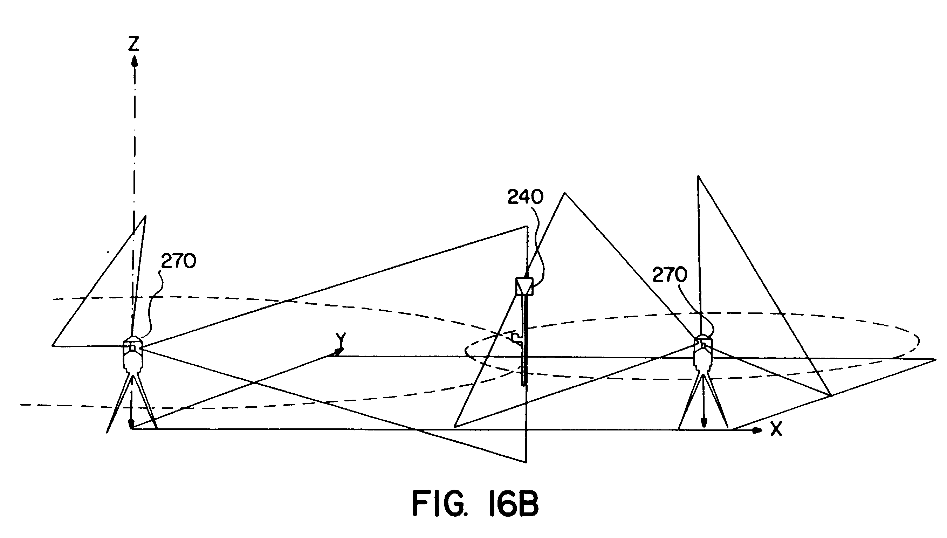

The present invention is illustrated in various embodiments in figures 16B, 18-21 and 23. The remaining figures describe various other aspects of spatial positioning and measurement systems are included as background art or as useful to the understanding of the present invention, and do not form part of the present invention as defined in the appended claims.

Figure 1A is a schematic view illustrating horizontal sensing and positioning in a spatial positioning and measurement system;

Figure 1B is a schematic view illustrating three-dimensional position sensing and positioning in a spatial positioning and measurement system;

Figure 2 is a schematic view illustrating vertical sensing and positioning in the system of Figure 1A;

Figure 3 is a flow chart illustrating horizontal and vertical sensing and positioning as illustrated in Figures 1 and 2;

Figure 4 is a side elevational view of a horizontal fixed station in a spatial positioning and measurement system;

Figure 5 is a side elevational view of another horizontal fixed station;

Figure 6 is a side elevational view of another horizontal fixed station:

Figure 7 is a side elevational view of a vertical fixed station in a spatial positioning and measurement system;

Figure 8 is a side elevational view of a portable position sensor in in a spatial positioning and measurement system;

Figures 9A-9D illustrate graphical views of a display when the system is used for construction lay-out;

Figures 10A and 10B illustrate exemplary display screens for equipment operators;

Figures 11A and 11B illustrate exemplary display screens for equipment operators;

Figures 12A and 12B illustrate exemplary display screens for equipment operators;

Figure 13 illustrates an automated environment with equipment for yaw control;

Figure 14 illustrates a mechanized cutting robot with yaw control;

Figure 15 illustrates a piece of mechanized earthmoving equipment with pitch, roll and yaw control;

Figure 16A is a schematic view illustrating three dimensional sensing and positioning using three fixed stations having counter-rotating beams;

Figure 16B is a schematic view illustrating three dimensional sensing and positioning using two double laser referent stations in accordance with the invention;

Figure 16C is a schematic view illustrating three dimensional sensing and positioning using one double laser fixed station and a portable base line;

Figure 17 is a partial top plan view of the rotating laser beam and a reflective surface according to one embodiment of the invention;

Figure 18 includes a top plan view and two side views of the dual beam station in accordance with another embodiment;

Figure 19 is a schematic view of a fixed referent station with a reflective surface in accordance with another embodiments of the invention;

Figure 20 is a schematic view of a fixed referent station with a reflective surface in accordance with another embodiment of the invention;

Figure 21 is a schematic view of the portable position sensor with a detector in accordance with a further embodiment;

Figure 22 is a schematic view of the base line position sensor in accordance with the arrangement shown in Figure 16C;

Figures 23A, 23B and 23C are top plan views of the reflective surface in accordance with another embodiment of the invention;

Figure 24 is a schematic view of the base line position sensor in accordance with the arrangement shown in Figure 16C;

Figure 25 is a cross-sectional view of the detector;

Figure 26 is a schematic view of a rotational platform; and
Figure 27 is a schematic view of a rotational platform.

Figure 1A

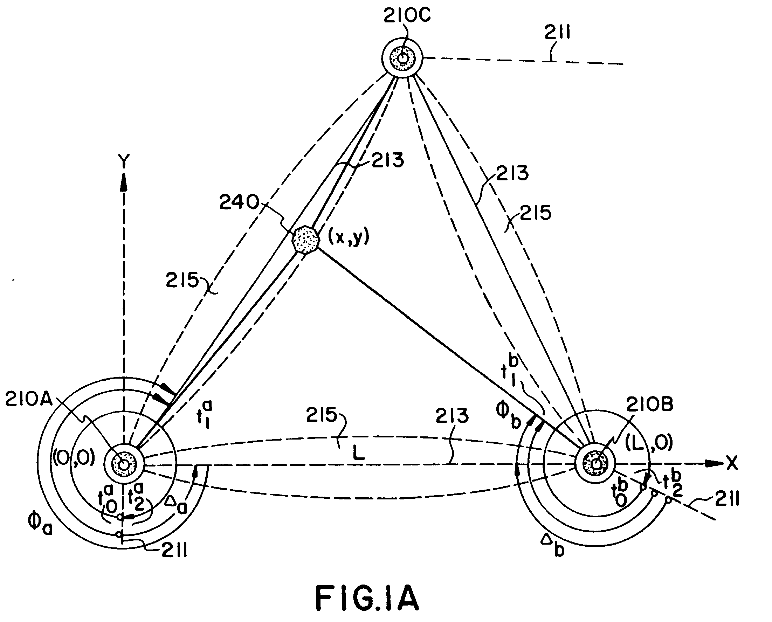

A spatial positioning system for horizontal positioning is schematically shown in Figure 1A. The system includes preferably three horizontal fixed referent stations (hereinafter "fixed stations") 210A, 210B and 210C, although only two such stations must be used, and portable position sensor 240. For ease of explanation, horizontal fixed station 210A is located at point (0,0) on a Cartesian coordinate system. Horizontal fixed station 210B is spaced a distance "L" along the x axis from horizontal fixed station 210A, so that horizontal fixed station 210B is located at point (L, 0). Horizontal fixed station 210C is located at another known position. The rotation datum 211 of the individual horizontal fixed stations is randomly positioned for each corresponding station. Portable position sensor 240 is randomly spaced a distance "x" along the x axis and a distance "y" along the y axis from horizontal fixed station 210A, so that portable position sensor 240 is located at point (x,y). The locations of the fixed stations are not limited to specific locations, and need only be somewhere within the three-dimensional Cartesian coordinate system. Areas of ambiguity 215 exist where the interior angles formed by line 213 between a pair of fixed stations 210 and the lines connecting the portable position sensor 240 are small, for example, of the order of 5°. In this area of ambiguity 215, position measurements become increasingly inaccurate as the portable position sensor approaches the line 213. The area of ambiguity 215 does not affect position measurement if three horizontal fixed stations 210 are used in calculating the position of the portable position sensor 240. This is because each pair of fixed stations, when detected by portable position sensor 240, generates x-y position information. Thus, when using three fixed stations, three x-y positions can be obtained (from the three permutations of pairs). These three x-y positions can be averaged to determine the actual x-y position. Alternatively, an algorithm may be used to determined which pair of fixed stations provides the most accurate position information based, for example, on the interior angles.

Figure 2

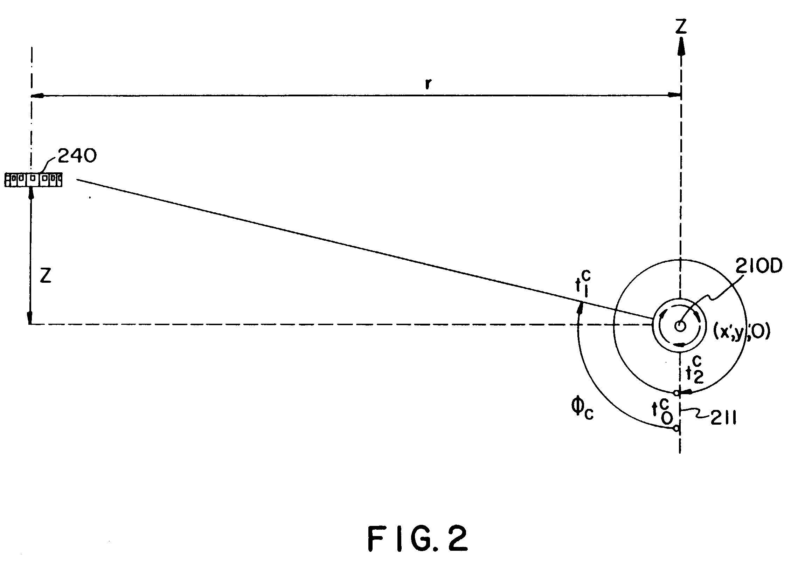

A spatial positioning system for vertical positioning is schematically shown in Figure 2. Vertical fixed station 210D is located at a point (x', y', 0). The portable position sensor 240 is located at a horizontal distance "r" and a random vertical distance "z" from vertical fixed station 210D.

Figure 1B

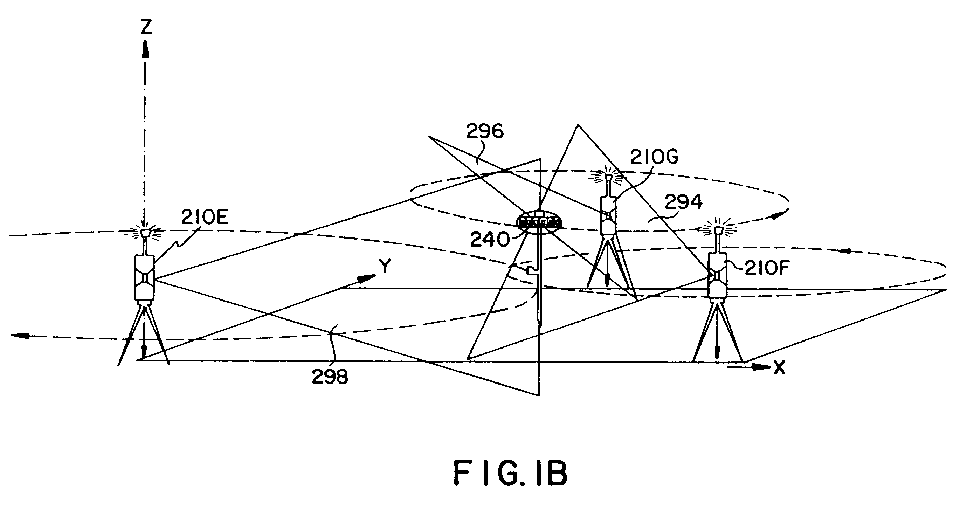

An alternative version of the spatial position system is shown in Figure 1B. In this alternative version three fixed stations 210E, 210F and 210G are rotated horizontally. However, each of the three spread beams, 294, 296 and 298 are tilted on different planes. The system would also work where the axes of rotation of the fixed stations were tilted so that the axis of rotation of each fixed station is distinct from the axes of rotation of the other fixed stations, and the rotation of the laser beams 294, 296 and 298 were on different planes. The spread (divergent) tilted beams 294, 296 and 298 sweep throughout the area of the site. In some applications, the spread beams 294, 296 and 298 will be shuttered or turned off in areas not within the site. Fixed station 210G is shown as generating a rotating spread beam 296. The spread beams 294 and 296 are shown on tilted planes which are rotated about a vertical axis. Optimum accuracy would be achieved if the axes are each rotated 60° from each other. This alternative version of the spatial positioning system will provide three dimension position information at the portable sensor 240 from the spread beams of the fixed stations 210E, 210F and 210G.

Figure 4

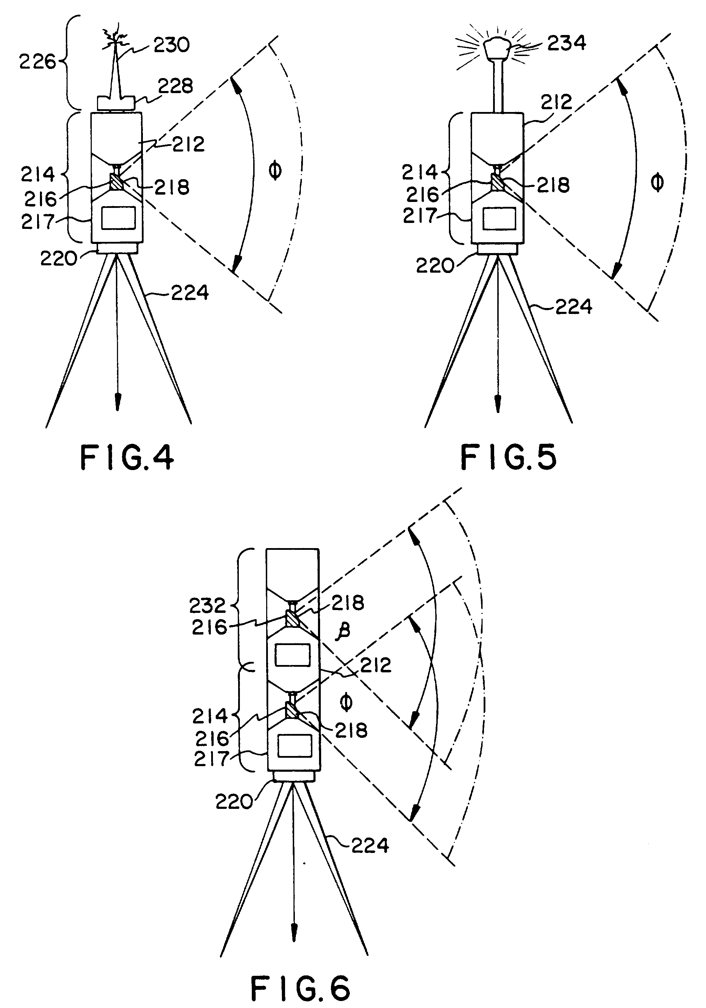

As is shown in Figure 4, each horizontal fixed station 210A, 210B and 210C preferably includes a laser 212 contained within a housing 214. The beam generated by laser 212 is directed to and reflected off of prism 216 having a conical reflector surface 218, thus producing a reflected laser beam having a predetermined angle of spread, i.e., amount of divergence, in the vertical direction. Of course prism 216 and conical reflector surface 218 may be replaced by any other suitable means to produce the angle of spread $\phi$.

The prism 216 with its reflective surface is rotated by a motor 217 contained within housing 214. It is most important that the motor, and hence the prism, rotate at a highly stable rotation rate (angular velocity). The stability of the rotation rate is critical to the measurement accuracy which the positioning system can achieve.

The prism, laser, and motor are aligned so that the laser beam produced by the laser 212 is reflected perpendicularly, which creates a reflected beam which is rotated in a plane orthogonal to the source laser beam. Thus, the spread of the reflected laser beam is perpendicular to the plane of rotation of the prism.

The housing 214 is preferably fixed to a levelling base 220. A conventional levelling mechanism, such as levelling bubbles (not shown), is used in such a way that will indicate when the plane of rotation is properly aligned with the horizon. A self-levelling mechanism (not shown) can also be used to maintain fine level requirements of the plane of rotation of the rotating laser beam. The levelling base 220 also preferably includes adjustable legs 224 to facilitate alignment of the plane of rotation. As illustrated in Figure 4, this can be achieved by a conventional tripod having adjustable legs.

Each horizontal fixed station 210A, 210B, 210C also preferably includes a communication mechanism 226. The communication mechanism 226 is activated and transmits a pulse of energy when the reflected laser beam crosses the rotation datum 211, in a manner to be described in detail below, so as to provide the time information necessary to calculate the position of the portable position sensor. As illustrated in Figure 4, this communication mechanism is formed by radio strobe transmitter 228 and radio antenna 230.

Figure 5

Alternatively, the communication mechanism is formed by a light strobe transmitter 234, as illustrated in Figure 5, or of any other mechanism which can emit the desired communication information such as, for example, coaxial cable or optical fiber cable capable of delivering an energy pulse. The communication mechanism can either bea rotating unidirectional mechanism, or a fixed omnidirectional mechanism. As is illustrated in Figure 5, the light strobe transmitter 234 emits an omnidirectional light beam, which can be received by the portable position sensor 240.

Figure 6

Figure 6 illustrates an alternative light strobe transmitter 232 in which a directional light beam is emitted. This alternative light strobe transmitter 232 includes a prism 216 with a conical reflector 218, so that the reflected strobe light beam has an angle of spread $\beta$ in the vertical direction. This beam also can be divergent in the horizontal direction. The prism 216 of the alternative light strobe transmitter 232 rotates at a slower or faster speed than the prism 216 of the laser housing 214, so that over a period of time the strobe will emit a strobe transmission in all desired directions.

Figure 7

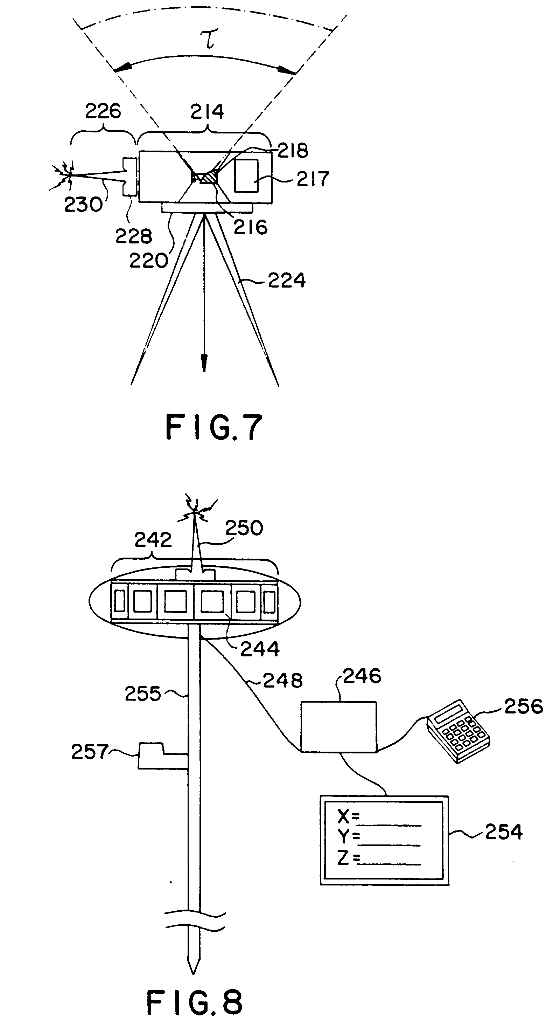

The vertical fixed station 210D is illustrated in Figure 7. The vertical fixed station is similar in all respects to the horizontal fixed station shown in Figure 4 except that the axis of beam spread, and hence prism 216, is oriented horizontally instead of vertically, so that the laser beam is rotated in a vertical plane. In this way, the reflected laser beam has an angle of spread T in the horizontal direction. Although a vertical fixed station having a radio strobe transmitter communication mechanism is shown in Figure 7, it is understood that a light strobe transmitter or other type of communications mechanism can be used. The rotation datum 211 of the vertical fixed station is preferably aligned with the z-axis through a levelling mechanism used to level the laser-prism-motor housing 214; however, a time offset, to be described below, may be used.

Figure 8

Portable position sensor 240, as shown in Figure 8, preferably includes a polygonal detector 242 to detect the presence of both the laser beams and light strobe pulses. Alternatively, this sensor ideally could be formed of a flat disk with a suitable photosensitive material disposed about its circumference.

The polygonal detector 242 is formed of a plurality of individual photodetectors 244, such as silicon based photodetectors or any other suitable photodetectors, disposed around the circumference of the sensor on the outside facets of a polygonal-shaped support. An optical filter (not shown), fixed to the front face of each photodetector 244 may be used in situations were the ambient light level is high, such as outdoors in the sun. However, an optical filter is not needed if competing light sources are of low levels, such as outdoor at night or in many closed indoor environments. Each photodetector 244 generates an electric pulse when a laser beam strikes its surface. This electric pulse is sent to a computer 246, via a communication link 248, as part of the information necessary to determine the spatial position of the portable position sensor 240.

Portable position sensor 240 also preferably includes radio receiving antenna 250 for receiving radio signals generated by the fixed stations 210A, 210B, 210C, and 210D. As mentioned briefly above, the radio signals generated by the fixed stations convey information about the time at which the laser beams cross their respective rotation datum. Radio receiver 252 operatively coupled to antenna 250 generates an electric pulse when it receives a radio signal. This electric pulse is also sent to the computer 246 as part of the information necessary to determine the position of the portable position sensor. Alternatively, light strobe pulses transmitted by either light strobe transmitters 234 or 232 could be received by the polygonal detector 242. In this case, the photodetectors 244 of the polygonal detector 242 generate electrical pulses upon detection of a light strobe pulse. These electric pulses are sent to the computer 246 via communication link 248, as part of the information necessary to determine the position of the portable position sensor 240. To aid in their identification, the light strobe pulses may be coded by amplitude or wavelength modulation of the pulse, or by multiple pulses, or by pulses of differing durations.

The computer 246, which can be of any suitable type, assigns a time label to each electrical pulse received from the polygonal detector 242 and, if used, the electrical pulses from radio receiver 250. The system is calibrated with an offset to compensate for any time lags due to, for example, the speed with which light travels from the prism 216 of each fixed station to the portable position sensor 240, or delays incurred by the time required for actuation of various parts. The computer generates the coordinates of the portable position sensor 240 through a series of mathematical algorithms. The portable position sensor 240 can be attached to a range pole 255 which is equipped with a bubble level 257. Thus, the computer 246 would determine the position of the bottom of the vertically aligned range pole 255 by subtracting the length of the range pole 255 from the computed z-coordinate of the portable position sensor 240.

The computed position coordinates are preferably output to an electronic display 254 coupled to computer 246. Display 254 is preferably an LCD or touch-screen, although any suitable display may be used. Input mechanism 256 is also preferably coupled to computer 246 to allow input of the positions of the fixed stations and to request various options in the software, such as system calibration. The input mechanism 256 is preferably a keyboard, although any other suitable input device may be used. A touch-screen monitor could be used for both input mechanism 256 and display 254.

The spatial positioning system includes a calibration sequence which must be followed before useful position information can be generated by the computer 246. The calibration sequence determines the x,y coordinates of the horizontal fixed stations 210A, 210B, 210C, and the x, y, z coordinates of the vertical fixed station 210D, and the offset calibration times of the rotation datums. The calibration sequence generates all necessary calibration information by successively placing the portable position sensor 240 in three points of known position. The offset calibration time is a time added or subtracted by the computer to the time labels corresponding to the rotation datum 211 of a horizontal fixed station (e.g., 210A). This time adjusts the time label to when the rotating laser beam is aligned with the straight line 213 connecting an alternate fixed station (e.g., 210B or 210C) from which position calculation will be generated. The time labels corresponding to the pair of fixed stations (e.g., 210A and 210B, or 210A and 210C) are to be used to generate the coordinate information of the portable position sensor 240.

As discussed above, each time a laser beam emitted by a fixed station passes a specific point in its rotation, the strobe or radio transmitter is triggered and a pulse is emitted. This point in the rotation is referred to as "the rotation datum". Each rotation datum is generated internally of its corresponding fixed station. The position (x, y, z) of the portable position sensor 240 is determined from the angle turned by each laser beam from its rotation datum to the portable position sensor. These angles are calculated through time measurements of the laser beam pulses and strobe pulses detected at the portable position sensor.

In operation, horizontal positioning relies on the horizontal fixed stations 210A, 210B, 210C. These fixed stations are located in known positions. The rotation datum which triggers emission of the strobe pulse can be randomly located. The computer 246 runs through a calibration sequence, which involves placing the portable position sensor in three known horizontal positions, and calculates a time offset for the time of arrival of the strobe signal. This time offset is equivalent to the difference in time between the rotation datum being located on the line connecting the fixed station with any of the others. Vertical positioning relies on both horizontal position of the portable position sensor 240 and the time information relayed by the vertical fixed station 210D, as can be seen from Figure 2.

Figure 3

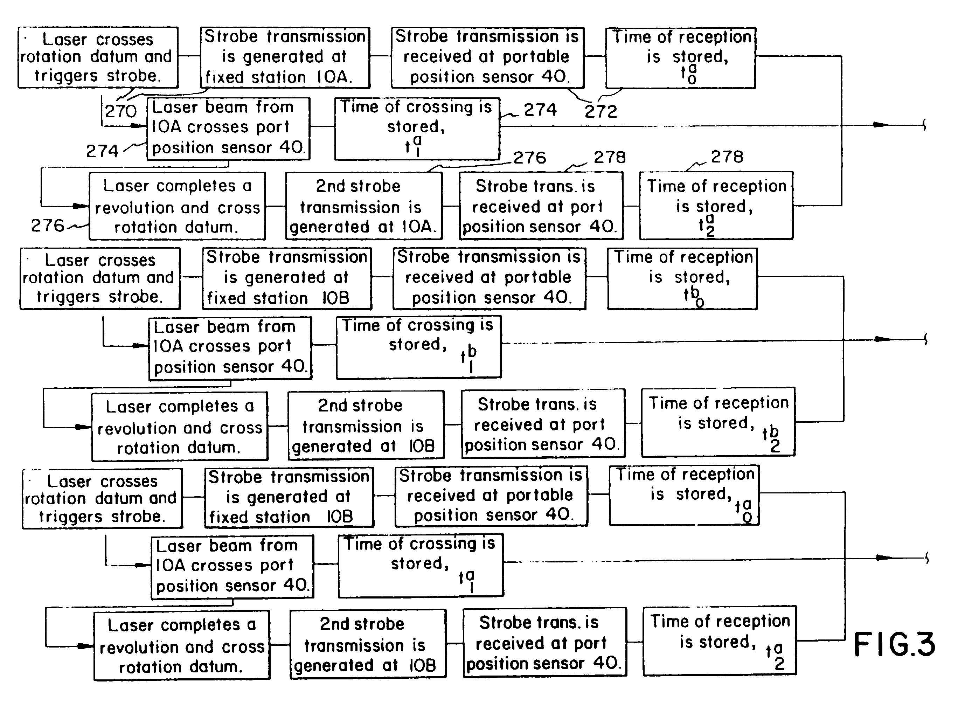

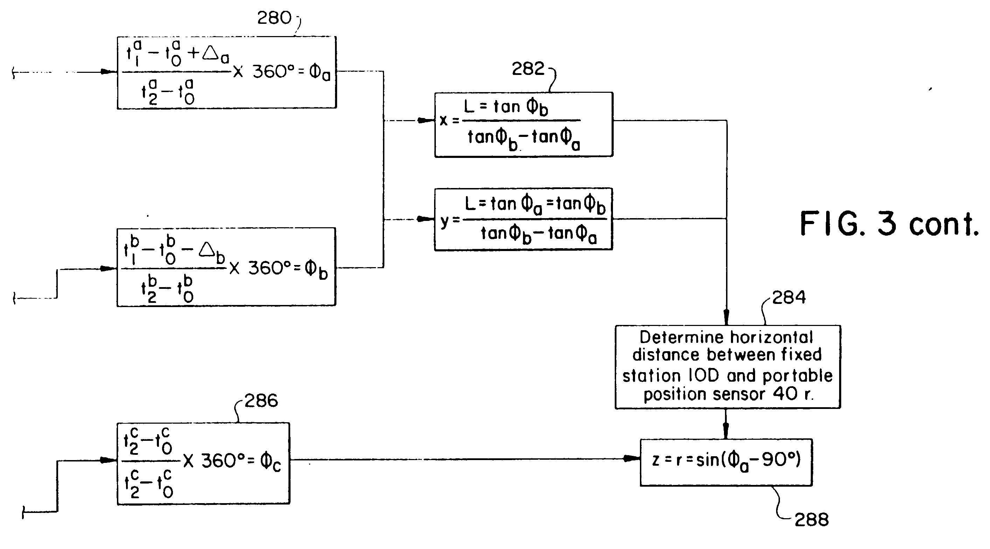

Horizontal fixed station 210A will be used as an example to explain the series of events set forth in the flow chart of Figure 3. This series of events begins when the laser beam emitted by fixed station 210A crosses the rotation datum and a strobe pulse is emitted (at point 270). The strobe pulse is received at the portable position sensor 240 and the time of reception, i.e., the time label of this pulse, is stored in computer 246 (at point 272). As the laser beam emitted by fixed station 210A sweeps the area, it eventually will strike the portable position sensor 240, and the time of this strike, i.e., its time label, will be stored in computer 246 (at point 274). As the laser completes a revolution, it again crosses the rotation datum and triggers a second strobe pulse (at point 276). The second strobe pulse is received by the portable position sensor and the time of reception is similarly recorded by the computer 246 (at point 278). It is important to note that this series of events simultaneously occurs for each of the other fixed stations and the portable position sensor.

Once the computer records all of the necessary time labels, each horizontal angle is calculated as the ratio of the time of the laser beam striking the portable position sensor minus the time of the first strobe pulse, plus the calibration offset for the fixed station, to the time of the second strobe pulse, multiplied by 360 degrees. This can be expressed by the following equations (at point 280):

$$\frac{t_1 - t_0 + \Delta_a}{t^a - t^a} \times 360° = \phi_a \; , \; \frac{t_1 - t_0 + \Delta_b}{t^b - t^b} \times 360° = \phi_b$$

The horizontal coordinates (x,y) are then calculated through the following trigonometric algorithms (at point 282):

$$x = \frac{L * \tan\phi_b}{\tan\phi_b - \tan\phi_a} \; , \; y = \frac{L * \tan\phi_a * \tan\phi_b}{\tan\phi_b - \tan\phi_a}$$

Once the horizontal position has been calculated, the horizontal distance between the portable position sensor and the vertical fixed station 210D is determined (at point 284). The vertical angle is calculated using the same ratio as used in conjunction with the horizontal angles described above. This equation is (at point 286):

$$\frac{t_1 - t_0}{t^c - t^c} \times 360° = \phi_c$$

The vertical coordinate z is then determined by the following trigonometric algorithm (at point 288):

$$z = r * \sin(\phi_c - 90')$$

Similarly, equations can be derived for solving the position of the portable position sensor 240 for the alternative spatial positioning system depicted in Figure 1B. Assuming the fixed stations 210E, 210F and 210G are located in the positions (0, 0, 0), $(x_f, x_f, x_f)$ and $(x_g, x_g, x_g)$, respectively; and the tilt angles (as measured form the vertical axis) of the laser beams $\gamma_e$, $\gamma_f$, $\gamma_g$ are 0°, 60°, and 60°, respectively; then the position of the portable position sensor 240 can be solved by the equations:

$$x = \frac{x_f\sin\theta_f - x_g\sin\theta_g - y_f\cos\theta_f + y_g\cos\theta_g - z_f\sqrt{3} + z_g\sqrt{3}}{(\sin\theta_f - \sin\theta_g) - \tan\theta_e(\cos\theta_f - \cos\theta_g)}$$

$$y = x(\tan\theta_e)$$

$$z = \frac{\sqrt{3}}{3}[(x - x_f)\sin\theta_f - (y - y_f)\cos\theta_f] + z_f$$

The spatial positioning system described above can be utilized in a multitude of applications. In addition, the interface with the user, the display 254, can be used to provide design information from a graphical database, such as computer-aided-design (CAD), through an interface with the computer. In this way, a user of the spatial positioning system can graphically view his position within a two-dimensional or three-dimensional graphical model.

Computer simulations have shown that the spatial positioning system disclosed herein can achieve position measurement accuracies of ± 5mm over a 400 m site, with a position measurement update rate of several times a second. This high degree of accuracy and the ability to provide the position information in real-time allows the disclosed positioning system to be applied to a number of applications where accurate, real-time positioning was not before possible. In addition, the disclosed system can be interfaced with graphical databases and provide real-time positioning in modelled graphical environments.

Figure 16A

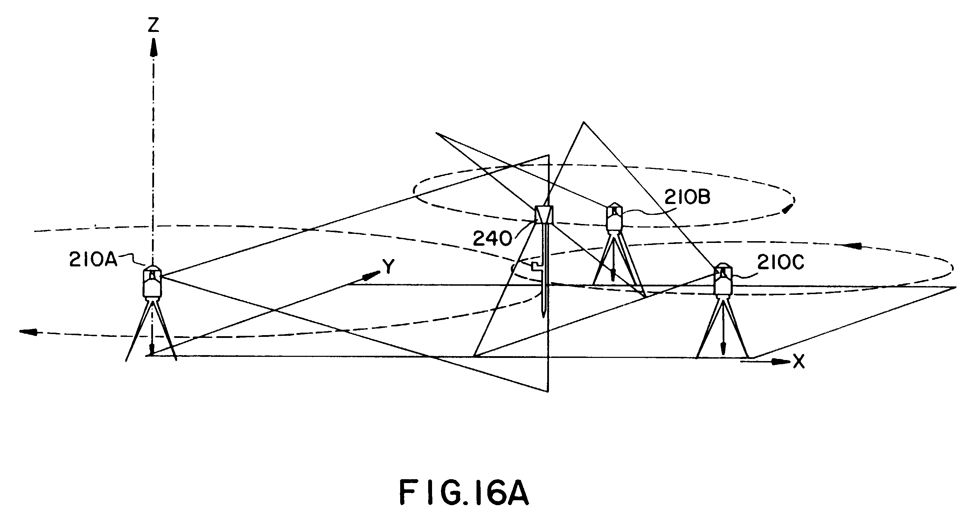

Another spatial positioning system for three-dimensional positioning is schematically shown in Figure 16A. The system includes preferably three fixed reflecting referent stations (hereinafter "reflecting stations") 210A, 210B, and 210C, and a portable position sensor 240.

### Figure 17

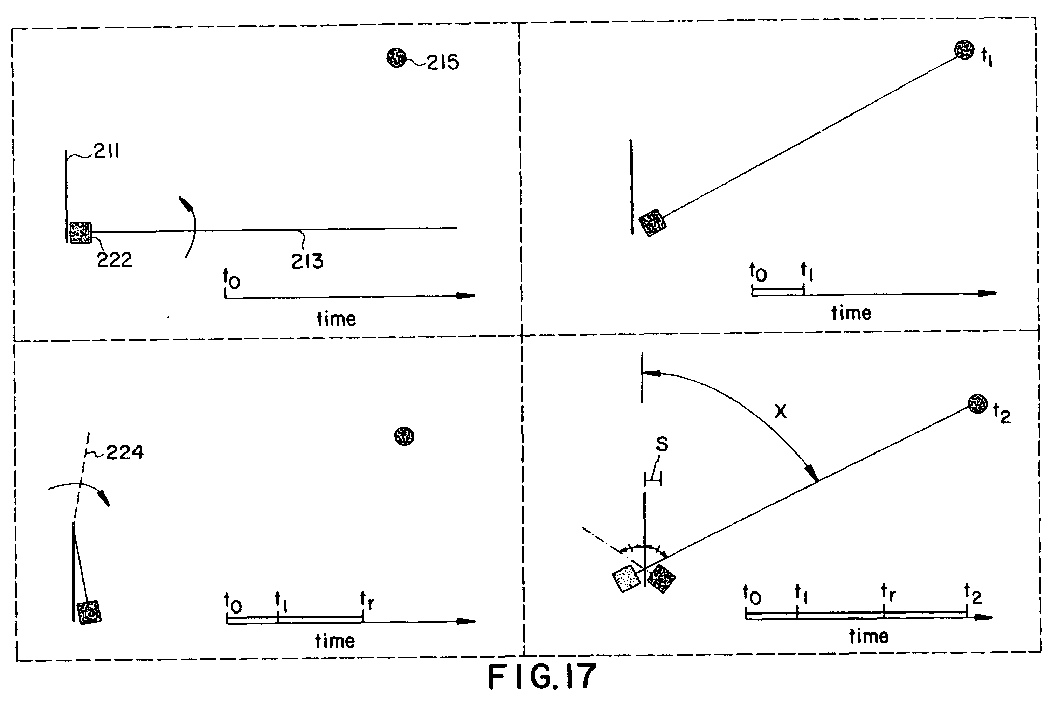

As shown in Figure 17, the reflecting station includes a reflective surface 211 which is placed behind rotating prism 222. The prism 222 creates a single primary laser beam 213 (hereinafter the "primary beam") which is rotated about an axis.

### Figures 19 and 20

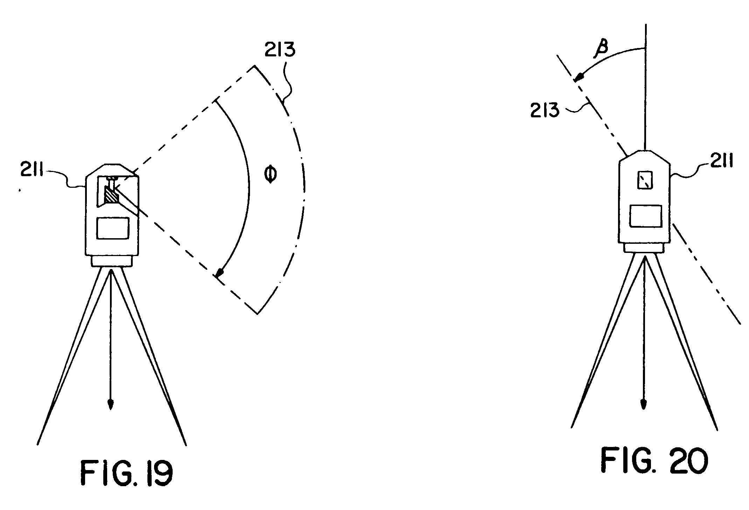

As shown in Figures 19 and 20, the primary beam 213 has an angle of divergence, $\phi$, in a plane which is inclined at an angle, $\beta$, from the rotational axis. When the rotation of the primary beam 213 causes the beam to strike the reflective surface 211, a secondary laser beam 224 (Figure 17) is created. The reflected laser beam (hereinafter the "secondary beam") 224 has the same divergence, $\phi$, and inclination, $\beta$, as the primary beam 213, but it rotates in the opposite direction. For any point 215 which is crossed by both the primary and reflected beams 213, 224, the horizontal angle, X, can be determined by the time difference between the time of crossing of the point by the two laser beams. An approximation of this angle can be expressed by Equation 1:

$$\left( \frac{t_1 - t_2}{2} + M \right) \times \frac{w}{2\pi} = X^{\circ}$$

$t_1 =$   time of crossing of primary beam (213)
$t_2 =$   time of crossing of secondary beam (224)
$\mu =$   offset factor
$W =$   speed of rotating laser (revs./sec.)
$X^{\circ} =$   horizontal angle from the fixed referent station to the portable position sensor

The offset, $\mu$, is a function of the distance of the reflective surface(s) from the center of rotation of the prism 222.

### Figures 23A, 23B and 23C

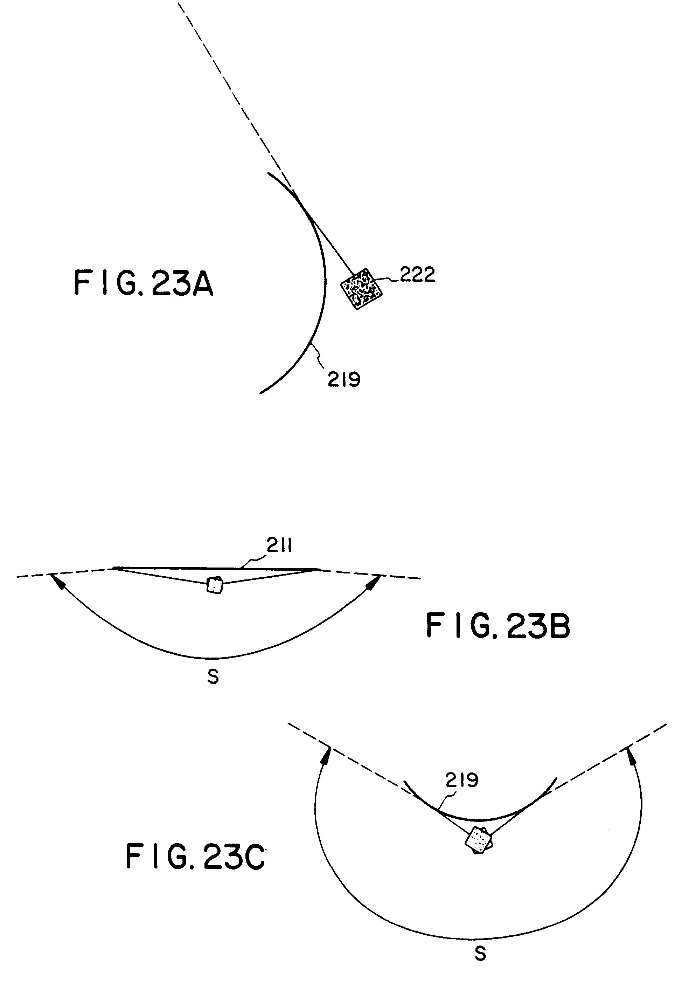

Alternatively, the reflective surface 211 may be curved as shown in Figures 23A, 23B and 23C. The curved reflective surface 219 can be used to increase the scan angle, S. The scan angle, S, is the horizontal angle which is swept by both the primary laser beam 213 and the secondary laser beam 224. Figures 23B and 23C show that the scan angle S is greater for a curved reflective surface than for a flat reflective surface(s).

### Figure 21

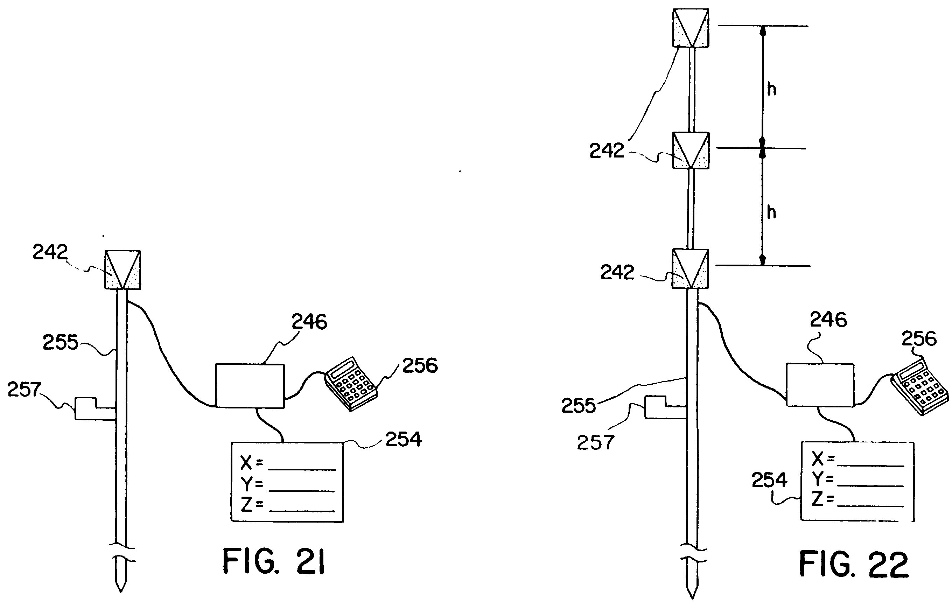

The portable position sensor 240, as shown in Figure 21, preferably includes a 360° lens detector 242 to detect the presence of the laser beam; however, any suitable detector may be used.

### Figure 25

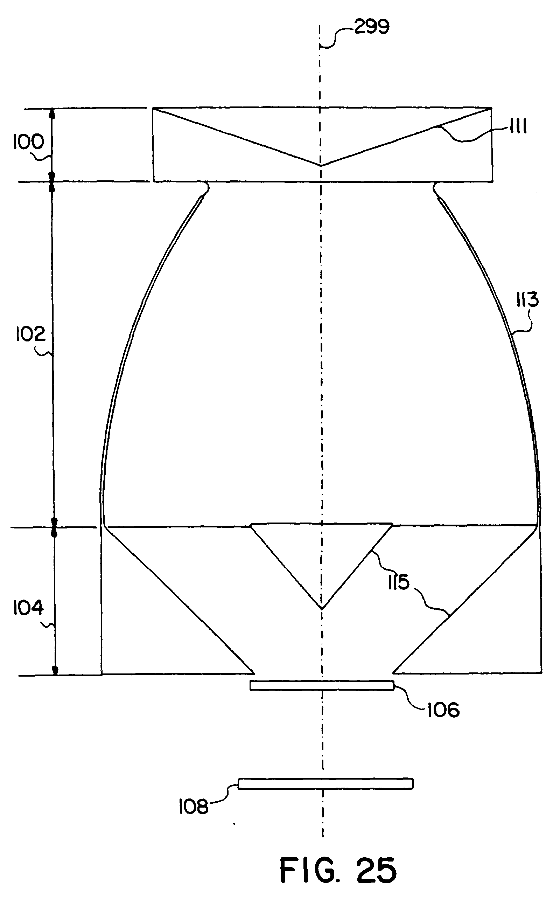

The 360° lens detector 242 preferably consists of an axicon 100, collimator 102, condenser 104, filter 106, and photodetector 108 which are aligned along an axis, as shown in Figure 25. The axicon 100 receives light from any direction from a range of incoming angles off the horizontal plane and redirects this light into the collimator 102. The collimator 102 redirects the light from the axicon 100 so that the direction of this light is closer to a direction which is parallel to the axis 299 of the detector. The light then enters the condenser 104 where the light is brought closer to the axis 299 of the detector. This arrangement of optics allows efficient use of optical filters 106 (i.e. optical bandpass filters), which are sensitive to incidence of light, and also reduces the size of the photodetector 108 surface area required. A lens (not shown) could also be placed before the photodetector 108 to further reduce the surface area required.

The reflective surface 111 of the axicon 100 can be conical, spherical, parabolic or any other suitable shape. The reflective surface 113 of the collimator 102 is of a shape which complements the shape of the reflective surface 111 of the axicon 100 to achieve the desired result of making the direction of the light parallel to the axis 299 of the detector 242. The collimator 102 may also consist of a system of lenses. Any or all of the reflective surfaces 111, 113, 115 can be designed to employ internal reflection.

The photodetector 108 generates an electric pulse when a laser beam strikes its surface. This electric pulse is sent to a computer 246, (Figure 21) via a communication link 248, (Figure 8) and forms part of the information necessary to determine the position of the portable position sensor 240, (Figure 16A).

The computer 246, which can be of any suitable type, assigns a time label to each electrical pulse received from the detector 242. The computer generates the coordinates of the portable position sensor 240 through a series of mathematical algorithms. The portable position sensor 240 can be attached to a range pole 255 (Figure 21) which is equipped with a bubble level 257. Thus, the computer 246 determines the position of the bottom of the vertically aligned range pole 255 by subtracting the length of the range pole 255 from the computed z-coordinate of the portable position sensor 240.

The computed position coordinates are preferably output to an electronic display 254 coupled to computer 246. Input mechanism 256 is also preferably coupled to computer 246 to allow input of the positions of the fixed stations and to request various options in the software, such as system calibration discussed below. The input mechanism 256 is preferably a keyboard, although any other suitable input device may be used.

The positioning system includes a calibration sequence which may be followed to determine the location of the fixed stations. The calibration sequence determines the x, y, z coordinates and the pitch and roll of the fixed stations 210A, 210B, 210C, (Figure 16A). The calibration sequence generates all necessary calibration information by successively placing the portable position sensor 240 in four points of known position. The computer records the timing information generated at the four known points. From this information the x, y, z coordinates and the pitch and roll of the or each fixed station are calculated.

### Figure 16B and 18

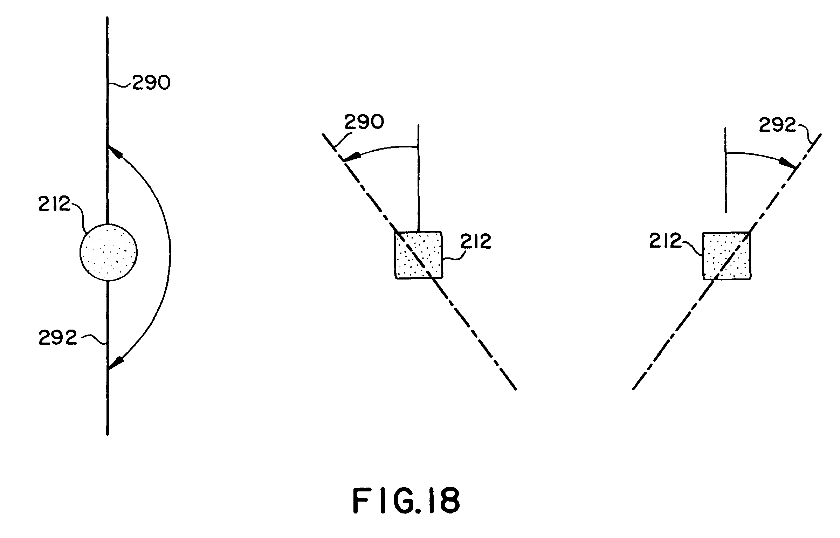

According to the present invention, only two fixed referent stations are required to provide three dimensional positioning and measurement capability, as illustrated in Figure 16B and Figure 18. The fixed referent stations differ from the reflecting station described above in that two primary beams, 290, 292, (Figure 18) are produced by the rotating prism 212. This type of fixed referent station having two primary beams and a reflective surface will be called a "dual beam station" 270. The two primary beams 290, 292 are inclined at opposite angles, $\beta$ and $\alpha$, from the axis of rotation, as shown in Figure 18. The two laser beams are separated by some horizontal angle, $\gamma$, which creates a time period between when the two laser beams cross a particular point in space. Each of the primary beams 290, 292 produces a secondary beam, 294, 296, which is produced when the primary beams strike the reflective surfaces 211 (Figures 17 and 23A, 23B and 23C).

Both horizontal and vertical angle measurements can be determined from the time information generated from one detector at the portable position sensor, from each dual beam station. An approximation of horizontal angle, X, is determined by the Equation above, using either pair of primary and secondary beams. The vertical angle, V, is determined from the time difference between the crossing of the two primary beams, 291, 292. An approximation of the vertical angle, V, is given by Equation 2:

$$\tau = \left( \frac{\gamma - w\,(2\pi)\,(t_A - t_B)}{2} \right) \cot \beta$$

$\tau =$ vertical angle  
$\gamma =$ horizontal angle offset of the primary beams, 290, 292  
$W =$ rate of rotation (revs./sec.)  
$t_A =$ time primary beam 290 crosses the point  
$t_B =$ time primary beam 292 crosses the point  
$\beta =$ inclination of the beams.

### Figure 16C

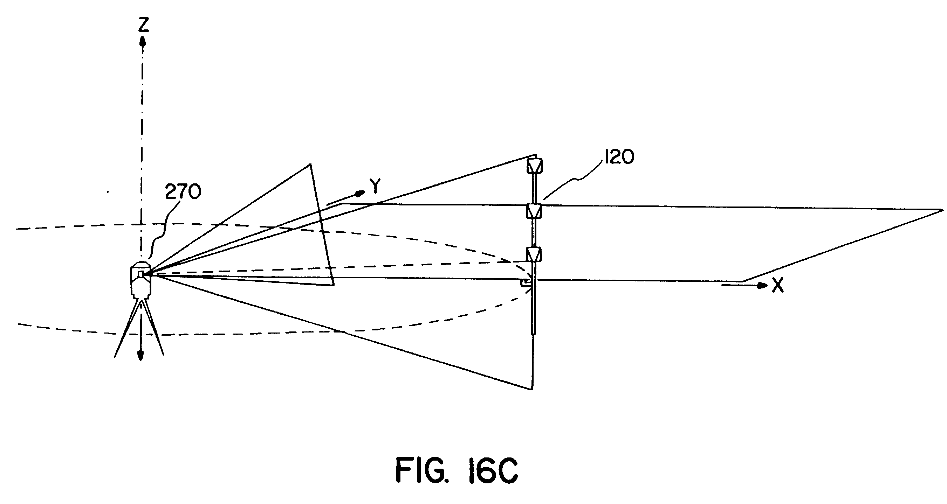

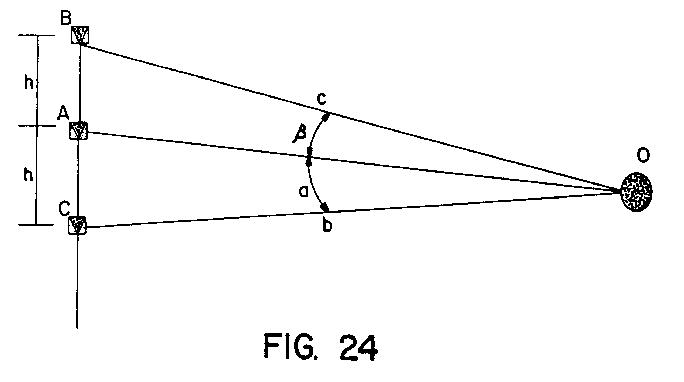

An alternative scheme is shown in Figure 16C, included only for illustrative purposes. This scheme, requires only one dual beam station and a portable position sensor to provide three-dimensional position information. As in GB-A-2 173 319 the portable position sensor (hereinafter a "base line position sensor") 120 includes three detectors 242, as shown in Figures 22 and 24. The detectors 242 are spaced at some distance, h, apart along the axis of the base line position sensor 120. The three detectors 242 form a base line. The horizontal angle is calculated using Equation 1. The vertical angle to each of the detectors 242 is calculated using Equation 2. Once the vertical angle to each of the detectors 242 is known, the horizontal distance between the base line position sensor 120 and the dual beam station 270 can be determined through a known reverse resection method.

Figure 26

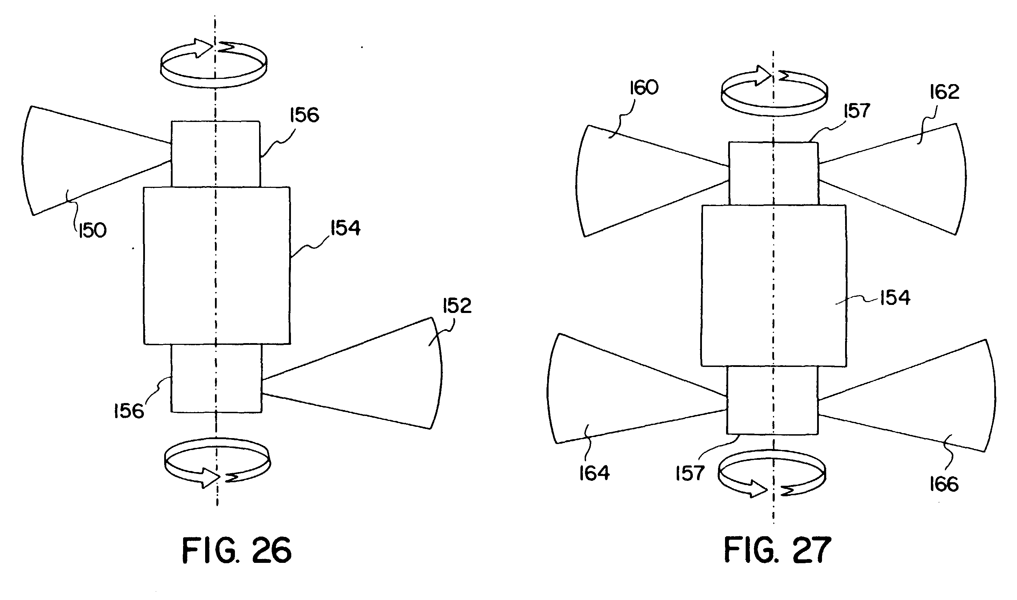

The reflecting stations 210A, 210B, and 210C can be replaced by a system including two counter-rotating laser beams, as illustrated in Fig. 26. The primary beam 150 is the equivalent of the primary beam 213 of the reflecting stations 210A, 210B, and 210C in Figure 16A. The secondary beam 152 is equivalent to the secondary beam 224 of the reflecting stations in Figure 16A. The primary laser beam 150 and the secondary laser beam 152 are rotated about an axis at a constant angular velocity, but in opposite directions, by separate rotating optical heads 156. The rotating optical heads 156 are rotated by a motor transmission system 154.

Figure 27

The dual beam station 270 can be replaced by a system including two pairs of counter-rotating laser beams as illustrated in Fig. 27. Two primary beams 160 and 162 have all of the characteristics of the primary beams 290 and 292 of the dual beam station 270 in Figure 16B. Two secondary beams 164 and 166 have all of the characteristics of the secondary beams 294, 296 of the dual beam station 270 in Figure 16B. Optical rotating heads 157 generate the pairs of laser beams and counter-rotate at a constant angular velocity. The optical rotating heads 157 are rotated by a motor/transmission system 154.

One exemplary application of the present invention involves linking the disclosed positioning system to an electronic model representation for construction lay-out. An electronic database of the design environment can be created by simple graphical techniques or can be generated from a previously generated 2D or 3D CAD design model of the construction site and objects under consideration.

Figures 9A-9D

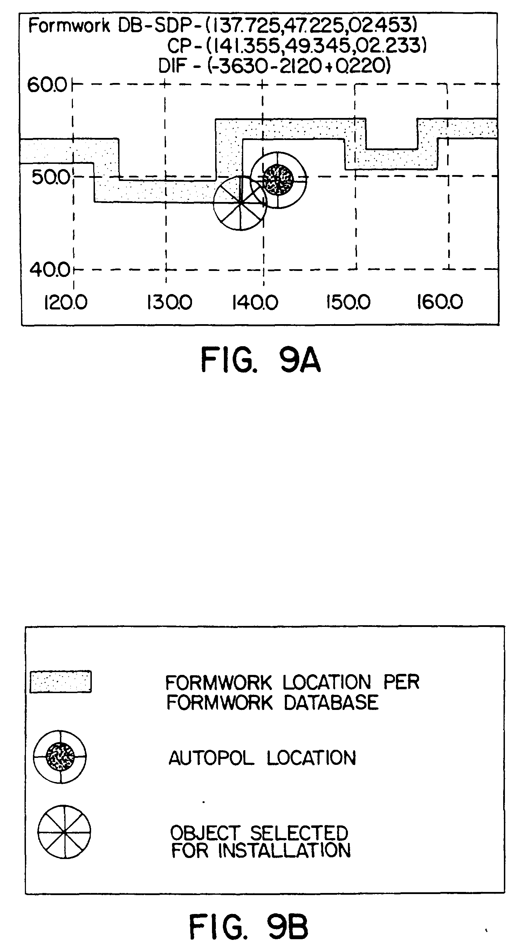

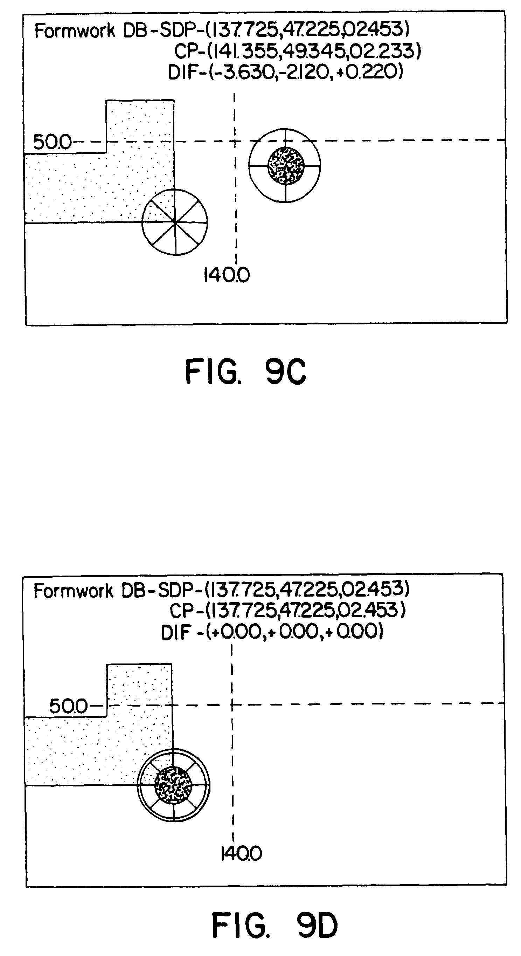

Figures 9A-9D represent various screens of a display 254 (Figure 8) which is being used for construction lay-out. Figure 9B is the legend for Figures 9A, 9C and 9D. In Figure 9A, a plan view of the construction materials to be installed is shown, in this case the construction material is concrete formwork, which is graphically modelled on the screen from a previously developed electronic model representation of its desired position on the work site. A desired position point and the current position point are shown on the display both graphically within the electronic model representation and with numerical coordinates. Figure 9C illustrates an ability to graphically zoom into the view for accurate graphical positioning. At the same time, the operator can refer to the coordinates of the current position of the portable position sensor 240 which are continuously updated as the portable position sensor 240 is moved toward the desired location. In addition, the difference between the current position of the portable position sensor and the desired position is also displayed and continuously updated. Figure 9D illustrates the screen of the display 254 when the portable position sensor has reached the desired location.

Another application of the present invention is for the positioning of mechanized equipment for earthmoving.

Figures 10A and 10B

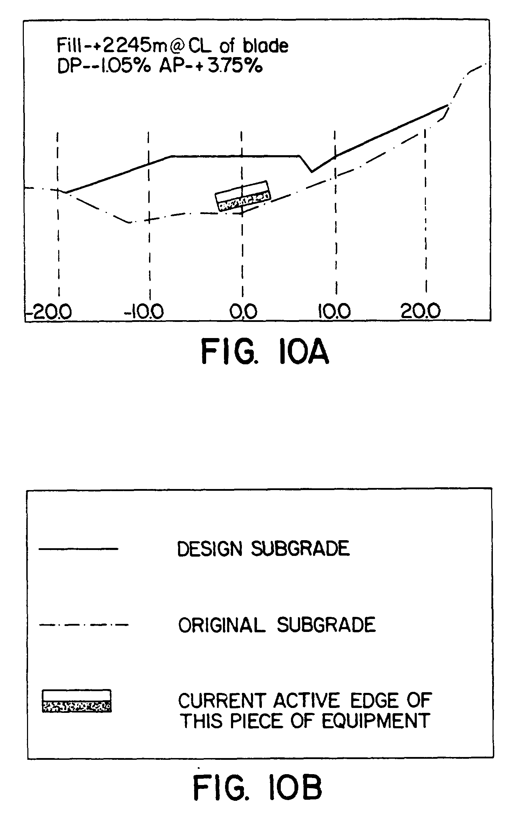

Figures 10A and 10B show the screen of a display 254 showing graphically the current position of the active edge of a piece of equipment located within a graphical database model of the appropriate cross-section of the site. Figure 10B is the legend for Figure 10A. The graphical database model of the cross-section shows both original subgrade and the final design grade which is to be achieved.

Figures 11A and 11B

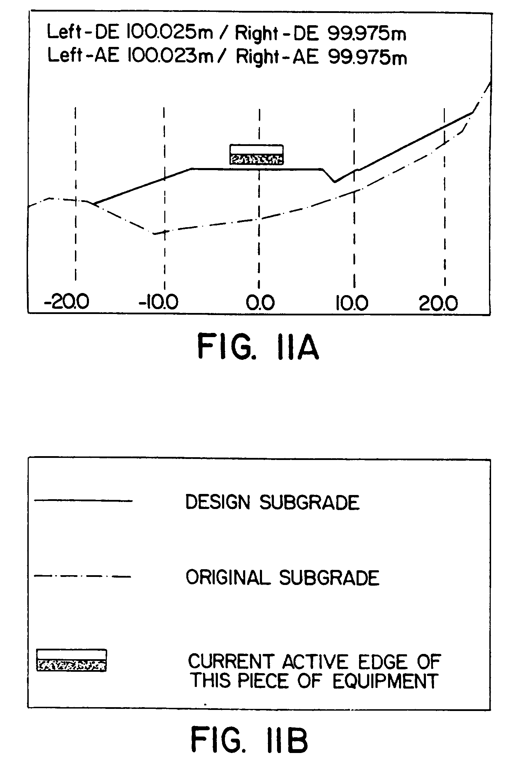

Figures 11A and 11B show the active edge of a paving machine when it has reached the finished design grade. The real-time information provided by the screen of the display 254 shown in Figures 10A and 11A eliminates the need for center line or slope staking. At anytime the operator can determine the amount of fill or cut required at the center line of the blade of the equipment. The design pitch and the actual pitch of the equipment are also provided.

Figure 12A and 12B

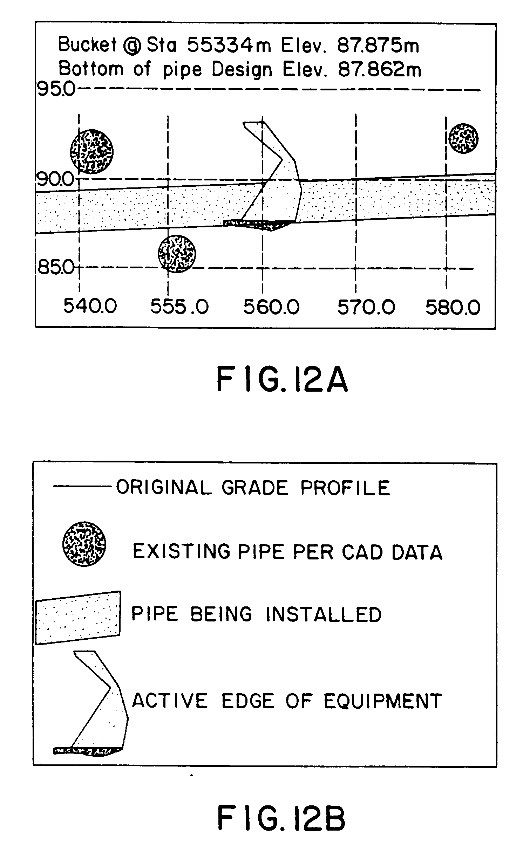

Figure 12A illustrates a screen where hidden obstacles can be graphically displayed via an electronic model representation of the previous installation of the obstacles. Figure 12B is the legend for Figure 12A.

The amount of graphical information which can be simultaneously displayed to the user of the spatial positioning

EP 0 543 954 B1

system will be limited only by the ability to graphically present the graphical database information modelling the environment of the portable position sensor 240.

The disclosed positioning system may also be used for monitoring fabrication of components.

Figure 13

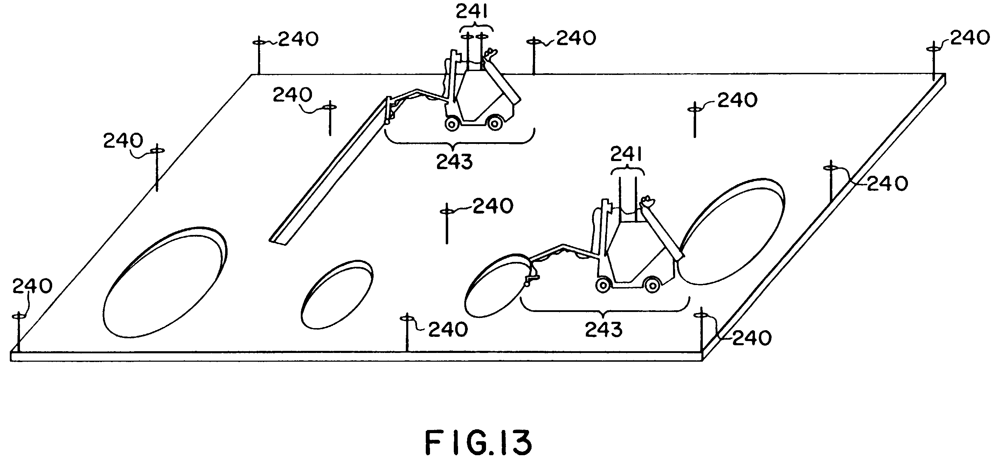

Figure 13 shows the manufacturing of a steel plate. A number of position sensors 240 are located throughout the surface of the steel plate. The orientation of the steel plate is positioned in space from fixed stations (not shown). As cutting operations are performed by the cutting robot 243, any movement in the steel plate is measured and analyzed. These movements are then transferred to a base coordinate system, so that the accuracy of the cutting robots is maintained.

Figure 14

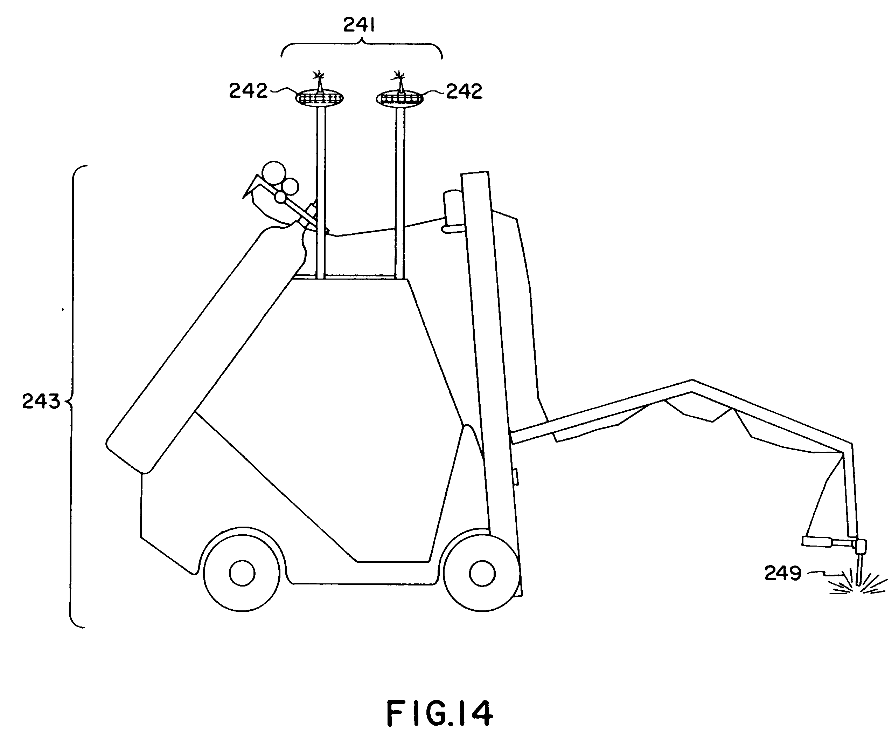

The cutting robot 243 is further shown in Figure 14. The cutting robot is guided by the use of a pair of polygonal detectors 242. This pair of detectors forms a yaw measurement mechanism 241. Through the use of the yaw measurement mechanism, the changes in direction of the robot 243 in the x-y plane can be monitored. The position of the active edge of the equipment 249 (in this case a cutting tool) is determined from measuring the angles and orientation of each movable link in the arm of the cutting robot. The methods of measurement of the movable links are known to those knowledgeable in the art and can be accomplished using one of many methods, including but not limited to, using rotational encoders at each rotational joint. These encoders transmit a degree of rotation to a computer from which the geometric position of the tool can be calculated. The computer would also interpret the yaw information from the yaw measurement mechanism 241. The data from the joint rotation mechanism and the yaw mechanism would be used to control the movement of the cutting robot, via control mechanisms, known to those knowledgeable in the art. The computing of the yaw measurement mechanism 241, the joint rotation mechanism, and the control of the cutting robots can be accomplished through the use of separately linked computers (not shown) or with a single computer.

Figure 15

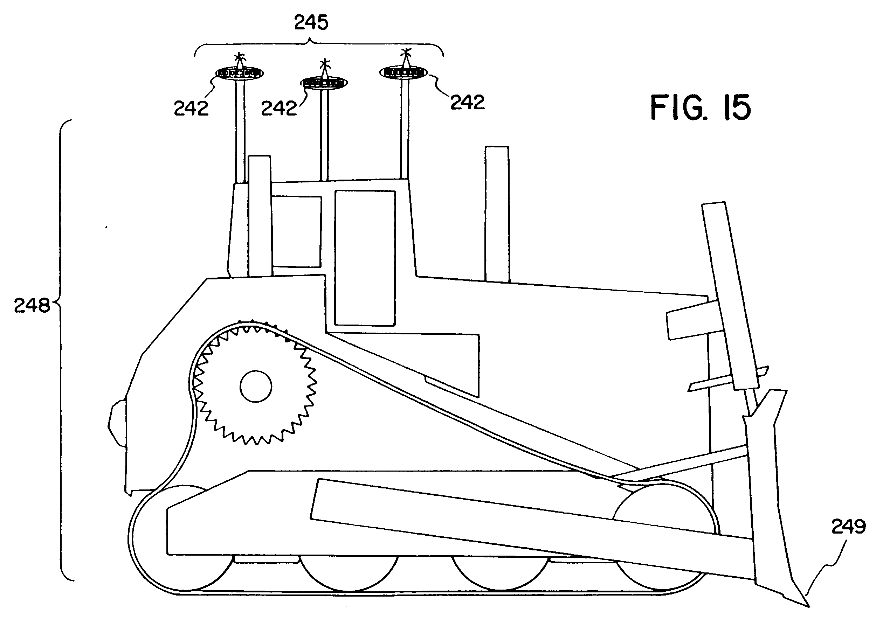

Figure 15 shows a pitch, roll, and yaw measurement mechanism 245 for a bulldozer. The same pitch, roll and yaw measurement mechanism 245 would work for any piece of equipment, autonomous vehicle, or robot that required pitch, roll and yaw control in addition to providing position. The pitch, roll, and yaw measurement mechanism 245 includes three polygonal detectors 242. The three polygonal detectors are positioned on a fixed component of the bulldozer. The relative positions of the three detectors should be in a pattern such that the three detectors form a triangle. A triangular arrangement is preferred, with any orientation acceptable, except an arrangement where the three detectors approach a straight line. The pitch, roll, and yaw measurement mechanism 245 would have a computer (not shown). Measurement of the active edge of the equipment 249 (in this case the bulldozer blade) could be accomplished in a fashion similar to the cutting robot described above, or through measuring the lengths of the hydraulic actuators and arms which control the active edge of the equipment, in a manner known to those knowledgeable in the art.

If the bulldozer is to run autonomously, the guidance of the bulldozer can be effected in a fashion similar to the cutting robot described above. If the bulldozer is to be controlled by an operator, display screens such as those shown in Figure 10A would be provided for the operator to view and thus receive position information. Similar displays could be used for various other applications and for different equipment.

The active edge of the equipment may also be positioned by disposing one or more polygonal detectors on parts that are directly related to the active edge of the equipment. For the cutting robot 243, a single polygonal detector could be placed at a known distance directly above the cutting tool, and consequently, could properly locate the cutting activity. Similarly for the bulldozer 248, two polygonal detectors located at either end of the top of the bulldozer blade can identify the location of the active edge of the equipment. This same configuration could be used for many other pieces of equipment and applications.

Although the equipment controls mentioned above are for above-ground applications in a manufacturing environment and/or in an outdoor environment, the current invention can also be utilized for other applications. The first such application is for parts machining. In parts machining, cutting tool locations can be fixed and the machined part can be moved. A system of polygonal detectors would be placed on the part to be machined. Coordinated indexing of the coordinate system of the machined part to the location of the active machining part would be continuously updated. A second application would be use of a waterproof version of the present invention for underwater location. The primary limitation of underwater use is in the distance which could be covered by the system. Turbidity of the water would significantly affect the overall distance covered by the system. A third application would be in space construction and space docking manoeuvers.

EP 0 543 954 B1

The above description is for illustrative purposes only and is not intended as a limitation of the present invention, the scope of which is defined solely by the appended claims. It will be appreciated that various, modifications may be made, which fall thin the scope of the invention as defined by the appended claims.

**Claims**

1. A spatial positioning and measurement system for determining the instantaneous x-y-z position of an object in a three-dimensional Cartesian coordinate system, comprising:

   (a) at least one fixed reference station (270), the or each said reference station (270) emitting at least one primary radiation beam (290) which is rotated about an axis, said at least one primary radiation beam (290) having an angle of divergence, $\phi$, in a plane which is inclined at an angle, $\beta$, from the rotational axis of said at least one primary radiation beam (290), and the or each said reference station (270) also emitting at least one secondary radiation beam (294), said at least one secondary radiation beam (294) having the same angle of divergence, $\phi$, and the same angle of inclination, $\beta$, as said at least one primary radiation beam (290), but being rotated in an opposite direction from said primary beam (290);
   (b) a portable position sensor (240) located at said object, said sensor (240) including detector means (242) for detecting said primary (290) and secondary (294) beams and emitting a signal each time one of said beams (290, 294) is detected; and
   (c) determination means (246) for determining the position of the object based on the signals emitted from said detector means (242),

   characterized in that

   (i) two fixed reference stations (270) are used and two primary beams (290, 292) and two secondary beams (294, 296) are emitted by each said fixed reference station (270),
   (ii) said determination means (246) is adapted to assign a time-label corresponding to the time of detection of each primary (290, 292) and secondary (294, 296) beam by the detector means (242), and is adapted to calculate the three-dimensional position of the sensor (240) from time differences between the times of detection of each primary (290, 292) and secondary (294, 296) beam by the detector means (242), the vertical angle being determined trom the time difference between detection at the sensor (240) of the passing of the two primary beams (290, 292) from each station (270) according to the following formula:

$$\tau = \left( \frac{\gamma - w \, (2\pi) \, (t_A - t_B)}{2} \right) C \, ot \, \beta \qquad (Eq. \ 2)$$

$\tau =$     vertical angle,
$\gamma =$     horizontal angle offset of the primary beams (290, 292),
$w =$     rate of rotation (revs./sec.),
$t_A =$     time primary beam (290) crosses the point at which the sensor (240) is located,
$t_B =$     time primary beam (292) crosses the point at which the sensor (240) is located,
$\beta =$     inclination of the beams plane at divergence.

2. A system as claimed in Claim 1, wherein each said reference station (270) includes at least one reflective surface (219) for generating said secondary beam (294, 296).

3. A system as claimed in Claim 2, wherein said at least one reflective surface (219) is curved.

4. A system as claimed in any of Claims 1 to 3, wherein

   (i) each said station (270) emits two primary laser beams (290, 292) defining said primary radiation beams (290, 292) and two secondary laser beams (294, 296) defining said secondary radiation beams (294, 296), and
   (ii) said sensor (240) is disposed in said object.

13

5. A system as claimed in any preceding claim, wherein said determination means includes a computer (246) which time-labels the detection of each primary (290, 292) and secondary (294, 296) beam detected by the detector means (242) and stores each said time-label in memory.

6. A method of determining the instantaneous x-y-z position of an object in a three-dimensional Cartesian coordinate system, comprising:

(a) emitting at least one primary laser beam (290) at at least one fixed reference station (270) and rotating said primary laser beam (290) about an axis, said at least one primary laser beam (290) having an angle of divergence, $\phi$, in a plane which is inclined at an angle, $\beta$, from the rotational axis of said at least one primary laser beam (290);
(b) generating at least one secondary laser beam (294) at said at least one fixed reference station (270) and rotating said secondary laser beam (294) in an opposite direction from said primary beam (290) about said axis, said at least one secondary laser beam (294) having the same angle of divergence, $\phi$, and the same angle of inclination, $\beta$, as said at least one primary laser beam (290);
(c) directing incoming light from said primary (290) and secondary (294) laser beams to at least one photodetector (108) located at said object;
(d) emitting a signal from said at least one photodetector (108) corresponding to the detection of each of said laser beams (290, 294); and
(e) calculating the relative spatial positioning of said object based on the signals emitted from said at least one photodetector (108),

characterized in that

(i) two primary beams (290, 292) and two secondary beams (294, 296) are emitted by two fixed reference stations (270);
(ii) each detection of said laser beams (290, 292, 294, 296) at said at least one photodetector (108) is time-labelled;
(iii) the relative spatial positioning of said object is calculated from time differences between the times of detection of each primary (290, 292) and secondary (294, 296) laser beam by the photodetector (108); and
(iv) the vertical angle is determined from the time difference between detection at the sensor (290) of the passing of the two primary beams (290, 292) from each station (270) according to the following formula:

$$\tau = \left( \frac{\gamma - w \, (2\pi) \, (t_A - t_B)}{2} \right) \mathrm{C} \, \mathrm{ot} \, \beta \qquad \text{(Eq. 2)}$$

$\tau =$ vertical angle,
$\gamma =$ horizontal angle offset of the primary beams (290, 292),
$w =$ rate of rotation (revs./sec.),
$t_A =$ time primary beam (290) crosses the point at which the sensor (240) is located,
$t_B =$ time primary beam (292) crosses the point at which the sensor (240) is located,
$\beta =$ inclination of the beams plane of divergence.

**Patentansprüche**

1. Räumliches Positionierungs- und Meßsystem zur Bestimmung der momentanen x-y-z-Position eines Objekts in einem dreidimensionalen Kartesischen Koordinatensystem, umfassend:

(a) zumindest eine feste Referenzstation (270), wobei diese oder jede solche Referenzstation (270) zumindest einen ersten Strahl (290) aussendet, der um eine Achse gedreht wird, wobei dieser zumindest eine erste Strahl (290) einen Divergenzwinkel $\phi$ in einer Ebene hat, die gegen die Rotationsachse dieses zumindest einen ersten Strahls (290) um einem Winkel $\beta$ geneigt ist, und wobei diese oder jede solche Referenzstation (270) auch zumindest einen zweiten Strahl (294) aussendet, der den gleichen Divergenzwinkel $\phi$ und den gleichen Neigungswinkel $\beta$ wie der zumindest eine erste Strahl (290) hat, jedoch in einer zu diesem ersten Strahl (290) entgegengesetzten Richtung gedreht wird;

(b) einen tragbaren Positionsfühler (240) der sich an dem genannten Objekt befindet und einen Detektor (242) zur Erfassung des ersten Strahls (290) und des zweiten Strahls (294) enthält und bei jeder Erfassung eines dieser Strahlen (290, 294) ein Signal ausgibt; und

(c) Bestimmungsmittel (246) zur Bestimmung der Position des Objekts, basierend auf den von dem Detektor (242) ausgegebenen Signalen,

dadurch gekennzeichnet, daß

(i) zwei feste Referenzstationen (270) verwendet werden und zwei erste Strahlen (290, 292) und zwei zweite Strahlen (294, 296) von jeder dieser festen Referenzstationen (270) ausgesandt werden,

(ii) das Bestimmungsmittel (246) ausgelegt ist für die Zuweisung einer Zeitmarke entsprechend der Zeit der Erfassung eines jeden ersten (290, 292) und zweiten (294, 296) Strahls durch den Detektor (242) und für die Berechnung der dreidimensionalen Position des Sensors (240) aus den Differenzen zwischen den Zeiten der Erfassung eines jeden ersten (290, 292) und zweiten (294, 296) Strahls durch den Detektor (242), wobei der vertikale Winkel aus der Zeitdifferenz zwischen der Erfassung des Durchlaufs der zwei ersten Strahlen (290, 292) aus jeder Station (270) an dem Sensor (240) gemäß folgender Formel berechnet wird:

$$\tau = \left( \frac{\gamma - w\,(2\pi)\,(t_A - t_B)}{2} \right) \cot\beta \qquad \text{(Gleichung 2)}$$

$\tau =$ vertikaler Winkel

$\gamma =$ horizontale Winkelverschiebung der ersten Strahlen (290, 292)

$w =$ Rotationsrate (U/sek.)

$t_A =$ Zeit, in der der erste Strahl (290) den Punkt kreuzt, an dem sich der Sensor (240) befindet

$t_B =$ Zeit, in der der erste Strahl (292) den Punkt kreuzt, an dem sich der Sensor (240) befindet

$\beta =$ Neigung der Divergenzebene der Strahlen.

2.  System nach Anspruch 1, bei welchem jede Referenzstation (270) zumindest eine reflektierende Fläche (219) für die Erzeugung des zweiten Strahls (294, 296) enthält.

3.  System nach Anspruch 2, bei welchem diese zumindest eine reflektierende Fläche (219) gekrümmt ist.

4.  System nach einem der Ansprüche 1 bis 3, bei welchem

(i) jede Station (270) zwei erste Laserstrahlen (290, 292) aussendet, die die genannten ersten Strahlen (290, 292) bilden, und zwei zweite Laserstrahlen (294, 296), die die zweiten Strahlen (294, 296) bilden, und

(ii) der Sensor (240) in dem Objekt angeordnet ist.

5.  System nach einem der vorhergehenden Ansprüche, bei welchem das Bestimmungsmittel einen Computer (246) enthält, der die Erfassung jedes von dem Detektor (242) erfaßten ersten (290, 292) und zweiten (294, 296) Strahls mit einer Zeitmarke versieht und jede solche Zeitmarke in einem Speicher speichert.

6.  Verfahren zur Bestimmung der momentanen x-y-z-Position eines Objekts in einem dreidimensionalen Kartesischen Koordinatensystem, umfassend:

(a) das Aussenden zumindest eines ersten Laserstrahls (290) an zumindest einer ersten festen Referenzstation (270) und Drehen dieses ersten Laserstrahls (290) um eine Achse, wobei dieser zumindest eine erste Laserstrahl (290) einen Divergenzwinkel $\phi$ in einer Ebene hat, die um einem Winkel $\beta$ gegen die Rotationsachse dieses zumindest einen ersten Laserstrahls (290) geneigt ist;

(b) das Erzeugen zumindest eines zweiten Laserstrahls (294) an dieser zumindest einen festen Referenzstation (270) und Drehen dieses zweiten Laserstrahls (294) in einer zu dem ersten Strahl (290) entgegengesetzten Richtung um die genannte Achse, wobei zumindest ein zweiter Laserstrahl (294) den gleichen Divergenzwinkel Ø und den gleichen Neigungswinkel β wie der zumindest eine erste Laserstrahl (290) aufweist;

(c) das Richten einfallenden Lichts von diesem ersten (290) und zweiten (294) Laserstrahl auf zumindest einen Photodetektor (108), der sich an dem Objekt befindet;

(d) das Ausgeben eines Signals aus diesem zumindest einen Photodetektor (108) entsprechend der Erfassung eines jeden dieser Laserstrahlen (290, 294); und

(e) das Berechnen der relativen räumlichen Positionierung des genannten Objekts, basierend auf den von diesem zumindest einen Photodetektor (108) ausgegebenen Signalen,

dadurch gekennzeichnet, daß

(i) zwei erste Strahlen (290, 292) und zwei zweite Strahlen (294, 296) von zwei festen Referenzstationen (270) ausgesandt werden;

(ii) jede Erfassung dieser Laserstrahlen (290, 292, 294, 296) an diesem zumindest einen Photodetektor (108) mit einer Zeitmarke versehen wird;

(iii) die relative räumliche Positionierung des Objekts aus den Zeitdifferenzen zwischen den Zeiten der Erfassung eines jeden ersten (290, 292) und zweiten (294, 296) Laserstrahls durch den Photodetektor (108) berechnet wird; und daß

(iv) der vertikale Winkel bestimmt wird aus der Zeitdifferenz zwischen der Erfassung des Durchlaufs der zwei ersten Strahlen (290, 292) aus jeder Station (270) an dem Sensor (290) gemäß der folgenden Formel:

$$\tau = \left( \frac{\gamma - w(2\pi)(t_A - t_B)}{2} \right) \cot\beta \qquad \text{(Gleichung 2)}$$

$\tau$ = vertikaler Winkel

$\gamma$ = horizontale Winkelverschiebung der ersten Strahlen (290, 292)

$w$ = Rotationsrate (U/sek.)

$t_A$ = Zeit, in der der erste Strahl (290) den Punkt kreuzt, an dem sich der Sensor (240) befindet

$t_B$ = Zeit, in der der erste Strahl (292) den Punkt kreuzt, an dem sich der Sensor (240) befindet

$\beta$ = Neigung der Divergenzebene der Strahlen.

## Revendications

1. Système de positionnement spatial et de mesure pour déterminer la position instantanée x-y-z d'un objet dans un système de coordonnées cartésiennes tridimensionnel, comportant:

(a) au moins un poste de référence fixe (270), le ou chacun desdits postes de référence (270) émettant au moins un faisceau de rayonnement principal (290) qui tourne autour d'un axe, le ou lesdits faisceaux de rayonnement principaux (290) ayant un angle de divergence φ, dans un plan incliné d'un angle β par rapport à l'axe de rotation du ou desdits faisceaux de rayonnement principaux (290), et le ou chacun desdits postes de référence (270) émettant également au moins un faisceau de rayonnement secondaire (294), le ou lesdits faisceaux de rayonnement secondaires (294) présentant le même angle de divergence φ et le même angle d'inclinaison β que le ou lesdits faisceaux de rayonnement principaux (290), mais étant entraînés en rotation dans une direction opposée audit faisceau principal (290);

(b) un capteur de position portatif (240) disposé sur ledit objet, ledit capteur (240) comprenant des moyens de détection (242) pour détecter lesdits faisceaux principaux (290) et secondaires (294) et émettant un signal chaque fois qu'un desdits faisceaux (290, 294) est détecté; et

(c) des moyens de détermination (246) afin de déterminer la position de l'objet en fonction des signaux émis par lesdits moyens de détection (242),

caractérisé en ce que

(i) deux postes de référence fixes (270) sont utilisés et deux faisceaux principaux (290, 292) et deux faisceaux secondaires (294, 296) sont émis par chacun desdits postes de référence fixes (270),

(ii) lesdits moyens de détermination (246) sont aptes à allouer un label de temps correspondant à l'instant de détection de chaque faisceau principal (290, 292) et secondaire (294, 296) par les moyens de détection (242), et sont aptes à calculer la position tridimensionnelle du capteur (240) à partir de différence de temps entre les instants de détection de chaque faisceau principal (290, 292) et secondaire (294, 296) par les moyens de détection (242), l'angle vertical étant déterminé à partir de la différence de temps entre la détection par le capteur (240) du passage des deux faisceaux principaux (290, 292) provenant de chaque poste (270) selon la formule suivante:

$$\tau = \left( \frac{\gamma - w\,(2\pi)\,(t_A - t_B)}{2} \right) \cot g\,\beta \qquad (2)$$

$\tau$ = angle vertical,
$\gamma$ = décalage d'angle horizontal des faisceaux principaux (290, 292),
w = vitesse de rotation (tours/seconde),
$t_A$ = instant auquel le faisceau principal (290) croise le point auquel est situé le capteur (240),
$t_B$ = instant auquel le faisceau principal (292) croise le point auquel est situé le capteur (240),
$\beta$ = inclinaison du plan de divergence des faisceaux.

2. Système selon la revendication 1, dans lequel chacun desdits postes de référence (270) comprend au moins une surface réfléchissante (219) pour générer ledit faisceau secondaire (294, 296).

3. Système selon la revendication 2, dans lequel ladite au moins une surface réfléchissante (219) est courbe.

4. Système selon l'une quelconque des revendications 1 à 3, dans lequel

(i) chacun desdits postes (270) émet deux faisceaux laser principaux (290, 292) définissant lesdits faisceaux de rayonnement principaux (290, 292) et deux faisceaux laser (294, 296) définissant lesdits faisceaux de rayonnement secondaires (294, 296), et
(ii) ledit capteur (240) est disposé dans ledit objet.

5. Système selon l'une quelconque des revendications précédentes, dans lequel lesdits moyens de détermination comprennent un calculateur (246) qui alloue un label de temps à la détection de chaque faisceau principal (290, 292) et secondaire (294, 296) détectée par les moyens de détection (282) et mémorise chacun desdits labels de temps dans une mémoire.

6. Procédé de détermination de la position x-y-z instantanée d'un objet dans un système de coordonnées cartésiennes tridimensionnel, comportant les étapes consistant à :

(a) émettre au moins un faisceau laser principal (290) en au moins un poste de référence fixe (270) et faire tourner ledit faisceau laser principal (290) autour d'un axe, le ou lesdits faisceaux laser principaux (290) ayant un angle de divergence $\phi$ dans un plan incliné d'un angle $\beta$ par rapport à l'axe de rotation du ou desdits faisceaux laser principaux (290);
(b) produire au moins un faisceau laser secondaire (294) dans ledit au moins un poste de référence fixe (270) et faire tourner ledit faisceau laser secondaire (294) dans une direction opposée audit faisceau principal (290) autour dudit axe, le ou lesdits faisceaux laser secondaires (294) ayant le même angle de divergence $\phi$ et le même angle d'inclinaison $\beta$ que le ou lesdits faisceaux laser principaux (290);
(c) diriger une lumière incidente provenant desdits faisceaux laser principaux (290) et secondaires (294) sur au moins un photodétecteur (108) situé sur ledit objet;
(d) émettre un signal à partir du ou desdits photodétecteurs (108) correspondant à la détection de chacun desdits faisceaux laser (290, 294); et
(e) calculer le positionnement spatial relatif dudit objet en fonction des signaux émis à partir du ou desdits photodétecteurs (108),

caractérisé en ce que

(i) deux faisceaux principaux (290, 292) et deux faisceaux secondaires (294, 296) sont émis par deux postes de référence fixes (270);

(ii) chaque détection desdits faisceaux laser (290, 292, 294, 296) par le ou lesdits photodétecteurs (108) est immatriculée temporellement;

(iii) le positionnement spatial relatif dudit objet est calculé à partir de différences de temps entre les instants de détection de chaque faisceau laser principal (290, 292) et secondaire (294, 296) par le photodétecteur (108); et

(iv) l'angle vertical est déterminé à partir de la différence de temps entre la détection par le capteur (290) du passage des deux faisceaux principaux (290, 292) provenant de chaque poste (270) selon la formule suivante:

$$\tau = \left( \frac{\gamma - w\,(2\pi)\,(t_A - t_B)}{2} \right) \cot g\,\beta \qquad (2)$$

$\tau$ = angle vertical,

$\gamma$ = décalage d'angle horizontal des faisceaux principaux (290, 292),

$w$ = vitesse de rotation (tours/seconde),

$t_A$ = instant auquel le faisceau principal (290) croise le point auquel se trouve le capteur (240),

$t_B$ = instant auquel le faisceau principal (292) croise le point auquel est situé le capteur (240),

$\beta$ = inclinaison du plan de divergence des faisceaux.

FIG.IA

FIG.1B

FIG.2

2IOD

(x',y',O)

r

Z

Z

240

211

$\phi_c$

$t_0^c$

$t_1^c$

$t_2^c$

EP 0 543 954 B1

Laser crosses rotation datum and triggers strobe.

Strobe transmission is generated at fixed station 10A.

Strobe transmission is received at portable position sensor 40.

Time of reception is stored, $t_0^a$

270

Laser beam from 10A crosses port position sensor 40.

Time of crossing is stored, $t_1^a$

274

272

274

Laser completes a revolution and cross rotation datum.

2nd strobe transmission is generated at 10A.

Strobe trans. is received at port position sensor 40.

Time of reception is stored, $t_2^a$

276

276

278

278

Laser crosses rotation datum and triggers strobe.

Strobe transmission is generated at fixed station 10B

Strobe transmission is received at portable position sensor 40.

Time of reception is stored, $t_0^b$

Laser beam from 10A crosses port position sensor 40.

Time of crossing is stored, $t_1^b$

Laser completes a revolution and cross rotation datum.

2nd strobe transmission is generated at 10B

Strobe trans. is received at port position sensor 40.

Time of reception is stored, $t_2^b$

Laser crosses rotation datum and triggers strobe.

Strobe transmission is generated at fixed station 10B

Strobe transmission is received at portable position sensor 40.

Time of reception is stored, $t_0^a$

Laser beam from 10A crosses port position sensor 40.

Time of crossing is stored, $t_1^a$

Laser completes a revolution and cross rotation datum.

2nd strobe transmission is generated at 10B

Strobe trans. is received at port position sensor 40.

Time of reception is stored, $t_2^a$

FIG.3

# FIG. 3 cont.

280

$$\frac{t_1^a - t_0^a + \triangle_a}{t_2^a - t_0^a} \times 360° = \Phi_a$$

$$\frac{t_1^b - t_0^b - \triangle_b}{t_2^b - t_0^b} \times 360° = \Phi_b$$

282

$$x = L \frac{\tan\Phi_b}{\tan\Phi_b - \tan\Phi_a}$$

$$y = L \frac{\tan\Phi_a = \tan\Phi_b}{\tan\Phi_b - \tan\Phi_a}$$

284

Determine horizontal distance between fixed station IOD and portable position sensor 40 r.

286

$$\frac{t_2^c - t_0^c}{t_2^c - t_0^c} \times 360° = \Phi_c$$

288

$$z = r = \sin(\Phi_a - 90°)$$

FIG.4

FIG.5

FIG.6

FIG.7

FIG.8

Formwork DB-SDP-(137.725,47.225,02.453)
CP-(141.355,49.345,02.233)
DIF - (-3630-2120+0220)

FIG. 9A

FORMWORK LOCATION PER
FORMWORK DATABASE

AUTOPOL LOCATION

OBJECT SELECTED
FOR INSTALLATION

FIG. 9B

Formwork DB-SDP-(137.725,47.225,02.453)
CP-(141.355,49.345,02.233)
DIF-(-3.630,-2.120,+0.220)

50.0

140.0

## FIG. 9C

Formwork DB-SDP-(137.725,47.225,02.453)
CP-(137.725,47.225,02.453)
DIF-(+0.00,+0.00,+0.00)

50.0

140.0

## FIG. 9D

Fill–+2245m@CL of blade
DP––1.05% AP–+3.75%

-20.0    -10.0    0.0    10.0    20.0

## FIG. 10A

| | DESIGN SUBGRADE |
| --- | --- |
| | ORIGINAL SUBGRADE |
| | CURRENT ACTIVE EDGE OF THIS PIECE OF EQUIPMENT |

## FIG. 10B

Left-DE 100.025m / Right-DE 99.975m
Left-AE 100.023m / Right-AE 99.975m

-20.0    -10.0    0.0    10.0    20.0

## FIG. IIA

—————————  DESIGN SUBGRADE

—·—·—·—·—  ORIGINAL SUBGRADE

CURRENT ACTIVE EDGE OF
THIS PIECE OF EQUIPMENT

## FIG. IIB

Bucket @ Sta 55334m Elev. 87.875m
Bottom of pipe Design Elev. 87.862m

## F I G. 12A

—— ORIGINAL GRADE PROFILE

EXISTING PIPE PER CAD DATA

PIPE BEING INSTALLED

ACTIVE EDGE OF EQUIPMENT

## F I G. 12B

FIG.13

FIG.14

245

242    242    242

FIG. 15

248

249

EP 0 543 954 B1

FIG.16A

EP 0 543 954 B1

FIG. 16B

EP 0 543 954 B1

FIG. 16C

FIG.17

EP 0 543 954 B1

FIG.18

FIG. 19

FIG. 20

EP 0 543 954 B1

EP 0 543 954 B1

242

255

257

246

256

X =
Y =
Z =

254

FIG. 21

242

242

h

h

242

255

257

246

256

X =
Y =
Z =

254

FIG. 22

FIG.23A

FIG.23B

FIG.23C

FIG. 24

FIG. 25

FIG. 26

FIG. 27

EP 0 543 954 B1